# EUROPEAN PATENT APPLICATION

(11) **EP 4 682 672 A1**
(43) Date of publication of application: **21.01.2026**
(21) Application number: 24792992.0
(22) Date of filing: 17.04.2024
(51) Int. Cl.: G06F 1/16, H04R 5/027, H04R 1/28

(54) **ELECTRONIC DEVICE COMPRISING MICROPHONE**

(30) Priority: 18.04.2023 KR 20230050779; 12.05.2023 KR 20230061987
(71) Applicant: Samsung Electronics Co., Ltd, Suwon-si, Gyeonggi-do 16677 (KR)
(72) Inventor: JI, Yonghun, Suwon-si, Gyeonggi-do 16677 (KR); RHEE, Minsu, Suwon-si, Gyeonggi-do 16677 (KR)
(74) Representative: Gulde & Partner
(86) International application number: PCT/KR2024/005130
(87) International publication number: WO 2024/219807

(57) **Abstract**

According to an exemplary embodiment of the present disclosure, an electronic device comprises: a housing that forms at least a portion of an exterior appearance of the electronic device; a socket accommodated in the housing corresponding to a tray hole formed in the housing; a tray that is inserted into the socket through the tray hole and is configured to support an external storage medium; a microphone accommodated in the housing; and a hole formed in the housing or the tray, wherein the electronic device is configured such that when a pin is inserted through the hole, the tray is separated from the socket, and a sound from the outside of the electronic device is introduced through the hole and transmitted to the microphone.

## Description

### [Technical Field]

The disclosure relates to an electronic device including a microphone.

### [Background Art]

An electronic device may include at least one microphone.

The above information may be provided as the related art for the purpose of assisting in the understanding of the disclosure. No assertion or determination is made as to whether any of the above description may be applied as the prior art related to the disclosure.

### [Disclosure of Invention]

### [Technical Problem]

A housing forming an exterior of an electronic device may include at least one microphone hole corresponding to at least one microphone. The at least one microphone hole may impair the aesthetic appearance of the electronic device.

Various embodiments of the disclosure provide an electronic device including a microphone that can reduce aesthetic deterioration of the electronic device due to a microphone hole. Various embodiments of the disclosure are provided to solve, or at least alleviate, the above-mentioned problems.

The technical problems to be achieved in the disclosure are not limited to those described above, and other technical problems that are not described may be understood by those of ordinary skill in the art from the following description.

### [Solution to Problem]

According to an exemplary embodiment of the disclosure, an electronic device is provided, and the electronic device includes a housing, a socket, a tray, a microphone, and a hole. The housing forms at least a portion of an exterior of the electronic device. The socket is accommodated in the housing corresponding to a tray hole formed in the housing. The tray is inserted into the socket through the tray hole and is configured to support an external storage medium. The microphone is accommodated in the housing. The hole is formed in the housing or the tray. The electronic device is configured such that when a pin is inserted through the hole, the tray is separated from the socket. The electronic device is configured such that sound from outside the electronic device is introduced through the hole and transmitted to the microphone.

According to an exemplary embodiment of the disclosure, an electronic device is provided, and the electronic device includes a housing, a socket, a tray, a microphone, a hole, and a passage structure. The housing forms at least a portion of an exterior of the electronic device. The socket is accommodated in the housing corresponding to a tray hole formed in the housing. The tray is inserted into the socket through the tray hole and is configured to support an external storage medium. The microphone is accommodated in the housing. The hole is formed in the housing or the tray. The passage structure guides sound introduced into the hole from outside the electronic device to the microphone. The passage structure guides a pin from the outside so that the tray is separated.

### [Advantageous Effects of Invention]

An electronic device including a microphone according to exemplary embodiments of the disclosure utilizes a single hole formed in a housing or a tray for supporting an external storage medium not only as a MIC hole but also as a pin hole into which a pin is inserted to separate the tray from a socket, thereby improving the aesthetics of the electronic device.

Further, effects that can be obtained or expected from various embodiments of the disclosure are disclosed directly or implicitly in the detailed description of the embodiments of the disclosure.

### [Brief Description of Drawings]

The above and other aspects, features, and advantages of specific embodiments of the disclosure will become more apparent from the following detailed description taken in conjunction with the accompanying drawings.
FIG. 1 is a block diagram illustrating a first exemplary electronic device within a network environment according to an embodiment of the disclosure.
FIG. 2 is a diagram illustrating several aspects of a second exemplary electronic device according to an embodiment of the disclosure.
FIG. 3 is a diagram illustrating an operation of separating an external storage medium from a second exemplary electronic device according to an embodiment of the disclosure.
FIG. 4 is a diagram and cross-sectional view illustrating a portion of a second exemplary electronic device in a first state of a tray according to an embodiment of the disclosure.
FIG. 5 is a cross-sectional view illustrating a portion of a second exemplary electronic device in a second state of a tray according to an embodiment of the disclosure.
FIG. 6 is an exploded perspective view illustrating a portion of a second exemplary electronic device according to an embodiment of the disclosure.
FIG. 7 is a perspective view illustrating a portion of a second exemplary electronic device according to an embodiment of the disclosure.
FIG. 8 is a perspective view illustrating a passage structure according to an embodiment of the disclosure.
FIG. 9 is a perspective view illustrating a portion of a third exemplary electronic device according to various embodiments of the disclosure.
FIG. 10 is a perspective view illustrating a portion of a fourth exemplary electronic device according to various embodiments of the disclosure.
FIG. 11 is a perspective view illustrating a portion of a fifth exemplary electronic device according to various embodiments of the disclosure.
FIG. 12 is a diagram and cross-sectional view illustrating a portion of a sixth exemplary electronic device in a first state of a tray according to various embodiments of the disclosure.
FIG. 13 is a cross-sectional view illustrating a portion of a sixth exemplary electronic device in a second state of a tray according to various embodiments of the disclosure.

### [Mode for the Invention]

Hereinafter, various example embodiments of the disclosure disclosed herein will be described in greater detail with reference to the accompanying drawings.

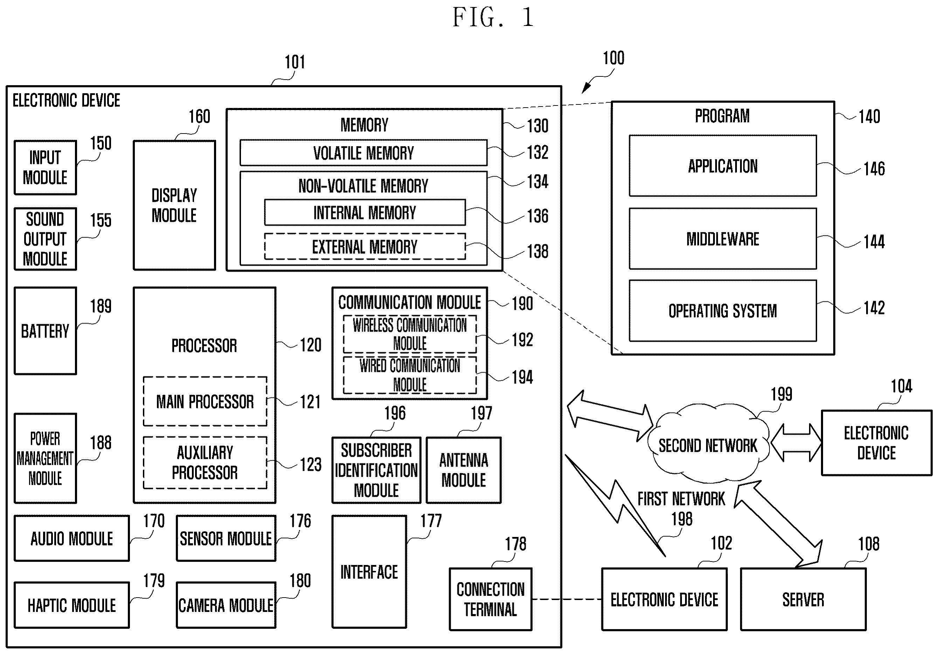

FIG. 1 is a block diagram of a first example electronic device 101 in a network environment 100 according to an embodiment of the disclosure.

Referring to FIG. 1, the first example electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The first example electronic device 101 may communicate with the external electronic device 104 via the server 108. The first example electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In various embodiments of the disclosure, at least one (e.g., the connection terminal 178) of the components may be omitted from the first example electronic device 101, or one or more other components may be added in the first example electronic device 101. In various embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the first example electronic device 101 coupled with the processor 120, and may perform various data processing or computation. As at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the first example electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., a neural network processing device) may include a hardware structure specified for processing an artificial intelligence model. The artificial intelligence model may be created through machine learning. Such learning may be performed, for example, in the first example electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the first example electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the first example electronic device 101, from the outside (e.g., a user) of the first example electronic device 101. The input module 150 may include, for example, a microphone, a mouse, a keyboard, a key (e.g., a button), or a digital pen (e.g., a stylus pen).

The sound output module 155 may output sound signals to the outside of the first example electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the first example electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the first example electronic device 101.

The sensor module 176 may detect an operational state (e.g., power or temperature) of the first example electronic device 101 or an environmental state (e.g., a state of a user) external to the first example electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the first example electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the first example electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the first example electronic device 101. The power management module 188 may be implemented as at least part of, for example, a power management integrated circuit (PMIC).

The battery 189 may supply power to at least one component of the first example electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the first example electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5th generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the first example electronic device 101 in a communication network, such as the first network 198 or the second network 199, using subscriber information (e.g., international mobile subscriber identity (IMSI)) stored in the SIM 196.

The wireless communication module 192 may support a 5G network, after a 4th generation (4G) network, and next-generation communication technology, e.g., new radio (NR) access technology. The NR access technology may support high-speed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the first example electronic device 101, an external electronic device (e.g., external the electronic device 104), or a network system (e.g., the second network 199). According to an embodiment of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the first example electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the first example electronic device 101 and the external electronic device 104 via the server 108 coupled with the second network 199. Each of the external electronic devices 102 or 104 may be a device of a same type as, or a different type, from the first example electronic device 101. All or some of operations to be executed at the first example electronic device 101 may be executed at one or more of the external electronic devices 102, 104, or 108. For example, if the first example electronic device 101 should perform a function or a service automatically, or in response to a request from a user or another device, the first example electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the first example electronic device 101. The first example electronic device 101 may provide the outcome, with or without further processing of the outcome, as at least part of a reply to the request. To that end, a cloud computing, distributed computing, mobile edge computing (MEC), or client-server computing technology may be used, for example. The first example electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The first example electronic device 101 may be applied to an intelligent service (e.g., smart home, smart city, smart car, or healthcare) based on 5G communication technology or IoT-related technology.

An electronic device according to an embodiment of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), the element may be coupled with the other element directly (e.g., wiredly), wirelessly, or via a third element.

The term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the first example electronic device 101). For example, a processor (e.g., the processor 120) of the machine (e.g., the first example electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORETM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

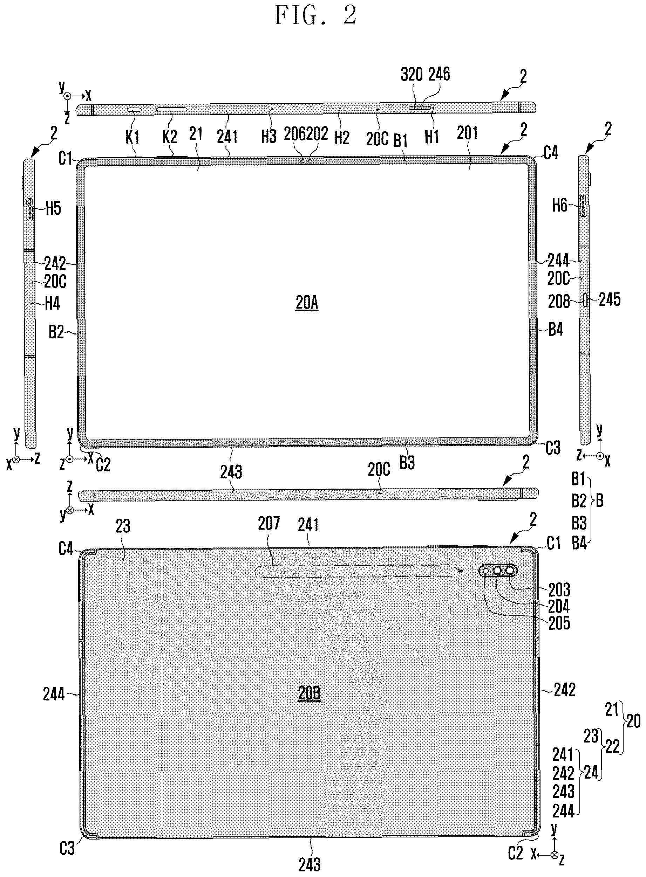

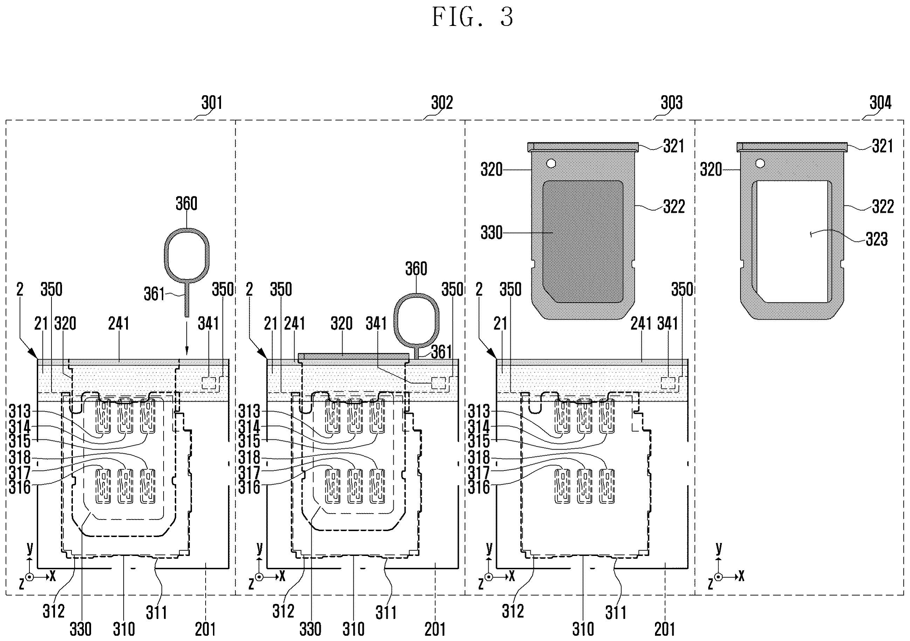

FIG. 2 is a diagram illustrating various aspects of a second exemplary electronic device 2 according to an embodiment of the disclosure. FIG. 3 is a diagram illustrating an operation of separating an external storage medium 330 from the second exemplary electronic device 2 according to an embodiment of the disclosure.

In various embodiments of the disclosure, for convenience of description, a direction in which a display area (or active area or screen area) included in the second exemplary electronic device 2 is visible (e.g., +z axis direction) is defined as a front surface 20A of the second exemplary electronic device 2, while the opposite direction (e.g., -z axis direction) is defined as a rear surface 20B of the second exemplary electronic device 2.

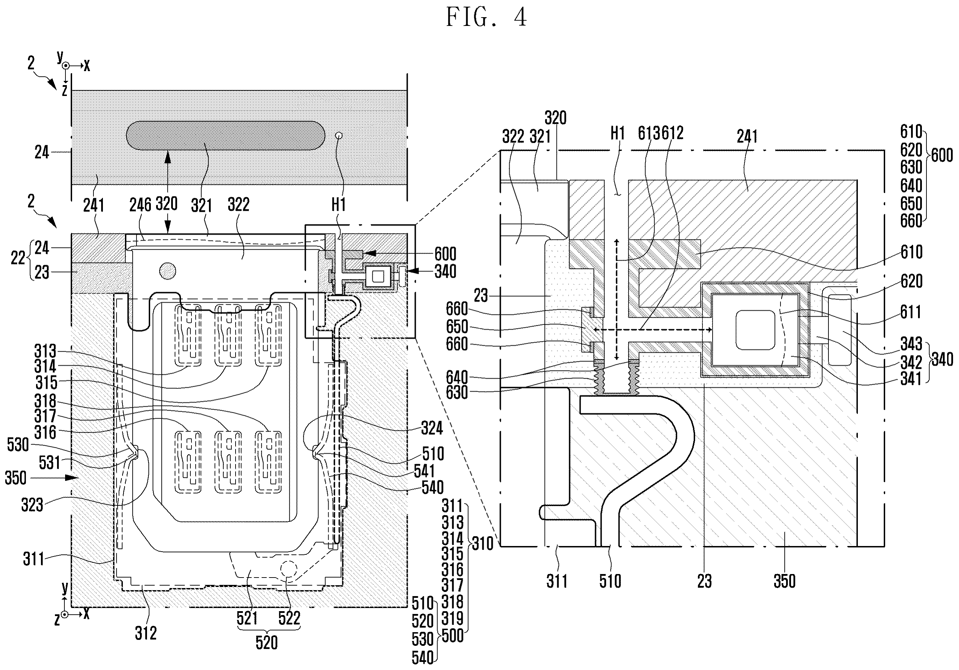

With reference to FIGS. 2 and 3, the second exemplary electronic device 2 may include a housing 20, a display module 201, a first camera module 202, a second camera module 203, a third camera module 204, a light emitting module 205, a sensor module 206, a first sound input module (e.g., a first sound input module 340 of FIG. 4), a second sound input module (not separately illustrated), a fourth sound input module (not separately illustrated), a first sound output module (not separately illustrated), a second sound output module (not separately illustrated), a key input module, a pen input device 207, a connector (e.g., first connection terminal) 208, a socket (e.g., second connection terminal) 310, a tray (or adapter) 320, an external storage medium 330, and/or a printed circuit board 350. Although not separately illustrated, the second exemplary electronic device 2 may omit at least one of the above components or additionally include other components.

According to various embodiments, the second exemplary electronic device 2 may include the first exemplary electronic device 101 of FIG. 1, or may include one component of a plurality of components included in the first exemplary electronic device 101.

According to an embodiment, the housing 20 may provide (or form) at least a portion of an exterior of the second exemplary electronic device 2. The housing 20 may, for example, provide (or form) at least a portion of a front surface 20A, a rear surface 20B, and/or a side surface 20C of the second exemplary electronic device 2. In various embodiments, the housing 20 may refer to a structure that provides at least a portion of the front surface 20A, the rear surface 20B, and the side surface 20C.

According to an embodiment, the housing 20 may include a front plate (or front cover) 21 and a frame (or case) 22.

According to an embodiment, the front plate 21 may provide (or form) at least a portion of the front surface 20A of the second exemplary electronic device 2. The front plate 21 may be substantially transparent at least in part. The front plate 21 may include, for example, a glass plate including various coating layers, or a polymer plate.

According to an embodiment, the frame 22 may provide (or form) at least a portion of the rear surface 20B and the side surface 20C of the second exemplary electronic device 2. The frame 22 may be substantially opaque. The frame 22 may include a metallic material and/or a non-metallic material (e.g., polymer).

According to an embodiment, the frame 22 may include a rear portion 23 and/or a side surface portion 24. The rear portion 23 may provide (or form) at least a portion of the rear surface 20B of the second exemplary electronic device 2. The side surface portion 24 (e.g., side) may provide (or form) at least a portion of the side surface 20C of the second exemplary electronic device 2.

According to an embodiment, the frame 22 may be provided (or formed) as a combination of metal (or metal structure, conductor, or conductive structure) (not separately illustrated) and non-metal (or non-metal structure, non-conductor, or non-conductive structure) (not separately illustrated). A portion of the metal may provide a portion of the rear portion 23, and another portion of the metal may provide a portion of the side surface portion 24. The metal may be, for example, provided (or formed) as an integrated or single structure (e.g., a single continuous structure or a complete structure). A portion of the non-metal may provide a portion of the rear portion 23, and another portion of the non-metal may provide a portion of the side surface portion 24. The non-metal may be, for example, provided (or formed) as an integrated or single structure (e.g., a single continuous structure or a complete structure).

According to various embodiments, although not separately illustrated, a rear plate (or rear cover) corresponding to the rear portion 23 and a lateral member (or side bezel, side bezel structure, or side) corresponding to the side surface portion 24 may be provided (or formed) in place of the frame 22. The rear plate may be substantially opaque and be made of, for example, coated or colored glass, ceramic, polymer, metal (e.g., aluminum, stainless steel, or magnesium), or a combination of at least two of the above materials.

According to an embodiment, the side surface portion 24 may include a first side surface portion (or a first side, a first side wall, or a first side wall portion, a first bezel, or a first bezel portion) 241, a second side surface portion (or a second side, a second side wall, or a second side wall portion, a second bezel, or a second bezel portion) 242, a third side surface portion (or a third side, a third side wall, or a third side wall portion, a third bezel, or a third bezel portion) 243, and/or a fourth side surface portion (or, a fourth side, a fourth side wall, or a fourth side wall portion, a fourth bezel, or a fourth bezel portion) 244.

According to an embodiment, when viewed from above the front plate 21 (e.g., when viewed in the -z-axis direction), the third side surface portion 243 may be spaced apart from the first side surface portion 241 in a first direction (e.g., -y-axis direction) and be substantially parallel to the first side surface portion 241. The first side surface portion 241 may provide (or form) a first side surface corresponding to a second direction (e.g., +y-axis direction) opposite to the first direction among side surfaces 20C of the second exemplary electronic device 2. The third side surface portion 243 may provide (or form) a third side surface corresponding to the first direction among side surfaces 20C of the second exemplary electronic device 2.

According to an embodiment, the second side surface portion 242 may connect one end of the first side surface portion 241 and one end of the third side 243. The fourth side surface portion 244 may connect the other end of the first side surface portion 241 and the other end of the third side 243. When viewed from above the front plate 21, the second side surface portion 242 may be spaced apart from the fourth side surface portion 244 in a third direction (e.g., +x axis direction) and be substantially parallel to the fourth side surface portion 244. The third side surface portion 243 may provide (or form) a third side surface corresponding to the third direction among side surfaces 20C of the second exemplary electronic device 2. The fourth side surface portion 244 may provide (or form) a fourth side surface corresponding to a fourth direction (e.g., -x axis direction) opposite to the third direction among side surfaces 20C of the second exemplary electronic device 2.

According to an embodiment, a first corner C1 where the first side surface portion 241 and the second side surface portion 242 are connected, a second corner C2 where the second side surface portion 242 and the third side surface portion 243 are connected, a third corner C3 where the third side 243 and the fourth side surface portion 244 are connected, and/or a fourth corner C4 where the first side surface portion 241 and the fourth side surface portion 244 are connected may be implemented as a smooth curve.

According to an embodiment, the display module 201 may be accommodated in the housing 20, and the display area (or active area or screen area) of the display module 201 may be visual (or may be visually exposed) through the front plate 21.

According to an embodiment, the front plate 21 may include a bezel area B. The bezel area B may not overlap with the display area of the display module 201, when viewed from above the front surface 20A of the second exemplary electronic device 2. The bezel area B may be provided (or formed) in a shape surrounding the display area when viewed from above the front surface 20A (e.g., in the form of a rectangular ring when viewed from above the front surface 20A). The bezel area B may be substantially opaque. The bezel area B may be, for example, provided (or formed) by an opaque material coated or colored on the front plate 21. The bezel area B may include a first bezel area B1, a second bezel area B2, a third bezel area B3, and/or a fourth bezel area B4. The first bezel area B1 may be positioned adjacent to the first side surface portion 241 corresponding to the first side surface portion 241. The second bezel area B2 may be positioned adjacent to the second side surface portion 242 corresponding to the second side surface portion 242. The third bezel area B3 may be positioned adjacent to the third side surface portion 243 corresponding to the third side surface portion 243. The fourth bezel area B4 may be positioned adjacent to the fourth side surface portion 244 corresponding to the fourth side surface portion 244.

According to an embodiment, the first camera module 202, the second camera module 203, and/or the third camera module 204 may include one or more lenses, an image sensor(s), and/or an image signal processor (ISP).

According to an embodiment, the first camera module 202 may be accommodated in the housing 20 corresponding to the front surface 20A of the second exemplary electronic device 2. External light may pass through the front plate 21 to reach the first camera module 202. The first camera module 202 may be defined or interpreted as a 'front camera module'.

According to an embodiment, the first camera module 202 may be accommodated in the housing 20 corresponding to the first bezel area B of the front plate 21. The front plate 21 may include a first transparent area (or a first light transmitting area) positioned in the first bezel area B. External light may pass through the first transparent area to reach the first camera module 202.

According to various embodiments, although not separately illustrated, the display area of the display module 201 may be implemented as large as possible so that the bezel area B may be reduced or substantially omitted, unlike the illustrated example. The first camera module 202 may overlap with the display area of the display module 201, when viewed from above the front surface 20A of the second exemplary electronic device 2. The first camera module 202 may be positioned on the rear surface of the display area or below or beneath the display area. When viewed from outside the second exemplary electronic device 2, the first camera module 202 or the position of the first camera module 202 may be substantially visually indistinguishable (or invisible). The first camera module 202 may include, for example, a hidden display rear camera (e.g., under display camera (UDC)). External light may pass through the front plate 21 and the display area to reach the first camera module 202.

According to various embodiments, in the case that the first camera module 202 is implemented as a hidden display rear camera, the first camera module 202 may be positioned in alignment with or at least partially inserted into an opening (not separately illustrated) provided in a display area of the display module 201. External light may pass through the opening of the display area and the front plate 21 to reach the first camera module 202. The opening of the display area aligned or overlapped with the first camera module 202 may be provided in the form of a hole. In various embodiments, when viewed from above the front surface 20A of the second exemplary electronic device 2, the opening of the display area aligned or overlapped with the first camera module 202 may be provided as a notch (not separately illustrated).

According to various embodiments, in the case that the first camera module 202 is implemented as a hidden display rear camera, the first camera module 202 may be aligned and positioned in a recess (not separately illustrated) provided in the rear surface of the display area or may be at least partially inserted into the recess.

According to various embodiments, although not separately illustrated, in the case that the first camera module 202 is implemented as a hidden display rear camera, a partial area that at least partially overlaps with the first camera module 202 among the display area of the display module 201 may include a different pixel structure and/or wiring structure compared to other areas. A pixel structure and/or wiring structure provided in a partial area that at least partially overlaps with the first camera module 202 among the display area may be implemented so as to reduce light loss between the outside of the second exemplary electronic device 2 and the first camera module 202. A partial area that at least partially overlaps with the first camera module 202 among the display area may have, for example, a different pixel density (e.g., number of pixels per unit area) compared to other areas. For example, a partial area that at least partially overlaps with the first camera module 202 among the display area may not substantially include a plurality of pixels.

According to an embodiment, the second camera module 203 and the third camera module 204 may be provided corresponding to the rear surface 20B of the second exemplary electronic device 2. The second camera module 203 may be defined or interpreted as a 'first rear camera module', and the third camera module 204 may be defined or interpreted as a 'second rear camera module'. Although not separately illustrated, the positions or numbers of a plurality of rear camera modules including the second camera module 203 and the third camera module 204 are not limited to the illustrated example and may vary.

According to an embodiment, the second camera module 203 may be positioned corresponding to a first camera hole provided (or formed) in the rear portion 23 of the frame 22 and be visible from outside the second exemplary electronic device 2 through the first camera hole. The third camera module 204 may be positioned corresponding to a second camera hole provided (or formed) in the rear portion 23 of the frame 22 and be visible from outside the second exemplary electronic device 2 through the second camera hole. In various embodiments, the rear portion 23 of the frame 22 may include a first light transmitting area replacing the first camera hole and/or a second light transmitting area replacing the second camera hole.

According to various embodiments, the second camera module 203 and/or the third camera module 204 may include a wide angle camera module, a telephoto camera module, a color camera module, a monochrome camera module, or an IR camera (e.g., time of flight (TOF) camera, structured light camera) module.

According to an embodiment, the second camera module 203 and/or the third camera module 204 may have different properties (e.g., angle of view) or functions.

According to various embodiments, the second camera module 203 and/or the third camera module 204 may provide different angles of view (or lenses with different angles of view). The second exemplary electronic device 2 may selectively use angles of view of the second camera module 203 and/or the third camera module 204 based on a user's selection regarding the angles of view.

According to an embodiment, the light emitting module 205 may be provided corresponding to the rear surface 20B of the second exemplary electronic device 2. The light emitting module 205 may be positioned corresponding to a flash hole or a light transmitting area provided (or formed) in the rear portion 23 of the frame 22. The light emitting module 205 may include a light source for the second camera module 203 and/or the third camera module 204. The light emitting module 205 may include, but is not limited to, an LED, an IR LED, or a xenon lamp.

According to various embodiments, the second exemplary electronic device 2 may include another light emitting module (e.g., LED, IR LED, or xenon lamp) (not separately illustrated) accommodated in the housing 20 corresponding to the front surface 20A thereof. The other light emitting module may provide status information of the second exemplary electronic device 2 in the form of light and/or provide a light source linked to the operation of the first camera module 202.

According to an embodiment, the sensor module 206 may be accommodated in the housing 20 corresponding to the front surface 20A of the second exemplary electronic device 2. The sensor module 206 may include, for example, an optical sensor (e.g., proximity sensor or illuminance sensor).

According to an embodiment, the sensor module 206 may be accommodated in the housing 20 corresponding to the first bezel area B of the front plate 21. The front plate 21 may include a second transparent area (or second light transmitting area) positioned in the first bezel area B. External light may pass through the second transparent area to reach the sensor module 206.

According to various embodiments, when viewed from above the front surface 20A of the second exemplary electronic device 2, the sensor module 206 may overlap with the display area in at least some identical or similar manner to an example in which the first camera module 202 overlaps with the display area of the display module 201. The sensor module 206 may be positioned on the rear surface of the display area or below or beneath the display area. When viewed from the outside of the second exemplary electronic device 2, the sensor module 206, or the position of the sensor module 206, may be substantially invisible or indistinguishable.

According to various embodiments, the second exemplary electronic device 2 may include at least one other sensor module (not separately illustrated) provided in various other positions. For example, the second exemplary electronic device 2 may include an optical, electrostatic, or ultrasonic biometric sensor module (e.g., fingerprint recognition sensor module). For example, when viewed from above the front surface 20A of the second exemplary electronic device 2, the biometric sensor module may overlap with the display area in a manner at least partially identical or similar to an example in which the first camera module 202 overlaps with the display area of the display module 201.

According to an embodiment, the first sound input module may include a first microphone 341. The first microphone 341 may be, for example, accommodated in the housing 20 corresponding to a first hole H1 (e.g., first microphone hole) provided (or formed) in the first side surface portion 241. The second sound input module (not separately illustrated) may include a second microphone. The second microphone may be, for example, accommodated in the housing 20 corresponding to a second hole H2 (e.g., second microphone hole) provided (or formed) in the first side surface portion 241. A third sound input module (not separately illustrated) may include a third microphone. The third microphone may be, for example, accommodated in the housing 20 corresponding to a third hole H3 (e.g., third microphone hole) provided (or formed) in the first side surface portion 241. The fourth sound input module (not separately illustrated) may include a fourth microphone. The fourth microphone may be, for example, accommodated in the housing 20 corresponding to a fourth hole H4 (e.g., fourth microphone hole) provided (or formed) in the fourth side surface portion 244. The positions or numbers of microphones and microphone holes corresponding to the microphones are not limited to the illustrated examples and may vary (not separately illustrated).

According to an embodiment, the second exemplary electronic device 2 may perform noise-cancelling via one or more microphones.

According to an embodiment, the second exemplary electronic device 2 may be configured to detect a direction of sound outside the same through a plurality of microphones.

According to an embodiment, the first sound output module (not separately illustrated) may include a first speaker. The first speaker may be, for example, accommodated in the housing 20 corresponding to a fifth hole H5 (e.g., first speaker hole) provided (or formed) in the second side surface portion 242. The second sound output module (not separately illustrated) may include a second speaker. The second speaker may be, for example, accommodated in the housing 20 corresponding to a sixth hole H6 (e.g., second speaker hole) provided (or formed) in the fourth side surface portion 244. The positions or numbers of the speakers and the corresponding speaker holes may vary (not separately illustrated).

According to various embodiments, the first sound output module may include a first piezo speaker, and the fifth hole H5 (e.g., first speaker hole) may be omitted. The second sound output module may include a second piezo speaker, and the sixth hole H6 (e.g., second speaker hole) may be omitted.

According to various embodiments, a single hole (not separately illustrated) replacing at least one of the first hole H1, the second hole H2, the third hole H3, or the fourth hole H4 and at least one of the fifth hole H5 or the sixth hole H6 may be provided (or formed) in the side surface portion 24 of the frame 22.

According to an embodiment, the key input module may include a first key (e.g., first side key) K1, a second key (e.g., second side key) K2, and/or a key signal generator (or key signal generation circuit) (not separately illustrated). For example, the first key K1 may be positioned in a first key hole provided (or formed) in the first side surface portion 241 of the frame 22, and the second key K2 may be positioned in a second key hole provided (or formed) in the first side surface portion 241 of the frame 22. The key signal generator may be accommodated in the housing 20. The key signal generator may generate a first key signal corresponding to a press or touch on the first key K1 and a second key signal corresponding to a press or touch on the second key K2. The position or number of key input modules is not limited to the illustrated examples and may vary.

According to an embodiment, the pen input device 207 (e.g., stylus pen) may be removably attached to the housing 20. The pen input device 207 may, for example, be removably attached to the rear surface 20B of the second exemplary electronic device 2. The pen input device 207 may, for example, be removably attached to the side surface 20C or the front surface 20A of the second exemplary electronic device 2. The pen input device 207 may be attached to the housing 20 through an attractive force between magnetic bodies, but is not limited thereto and may be disposed in the housing 20 by various other methods such as insertion into the interior of the housing 20.

According to an embodiment, the connector 208 may be accommodated in the housing 20 corresponding to a connector hole 245 provided (or formed) in the side surface portion 24 of the frame 22. The connector hole 245 may be located, for example, in the fourth side surface portion 244. The second exemplary electronic device 2 may transmit and/or receive power and/or data to and from an external electronic device (e.g., the external electronic device 102 or 104 of FIG. 1) electrically connected to the connector 208. The connector 208 may include, for example, a USB connector or an HDMI connector. The position or number of the connector hole 245 and the corresponding connector 208 is not limited to the illustrated example and may vary.

According to an embodiment, the socket (or connector) 310 may be accommodated in the housing 20 corresponding to the tray hole 246 provided (or formed) in the side surface portion 24 of the frame 22. The tray hole 246 may be located, for example, in the first side surface portion 241. The position or number of the tray hole 246 and the corresponding socket 310 is not limited to the illustrated example and may vary.

According to an embodiment, the tray (or adapter) 320 may be inserted into the socket 310 through the tray hole 246 provided (or formed) in the side surface portion 24 of the frame 22. The tray 320 may connect the external storage medium 330 and the socket 310. The external storage medium 330 may be removably attached to the tray 320. When the tray 320 in which the external storage medium 330 is disposed is inserted into the socket 310 through the tray hole 246, the external storage medium 330 may be electrically connected to the socket 310. When the tray 320 is inserted into the socket 310, the external storage medium 330 may be supported by a combination of the tray 320 and the socket 310 and be stably electrically connected to the socket 310. The tray 320 may be, for example, referred to by various other terms such as an 'external storage medium tray' (e.g., a SIM tray or a SIM card tray), an 'external storage medium support' (e.g., a SIM support or a SIM card support), an 'external storage medium support member' (e.g., a SIM support member or a SIM card support member), or an 'external storage medium holder'. Hereinafter, a 'first state of the tray 320' will be defined as a state in which the tray 320 is fully inserted into the socket 310 such that no further insertion into the socket 310 is possible.

According to an embodiment, the socket 310 may include a shell 311 and a terminal portion 312.

According to an embodiment, the shell 311 of the socket 310 may provide (or form) at least a portion of a slot (not separately illustrated) into which the tray 320 is inserted. The shell 311 may guide insertion of the tray 320. The shell 311 may be, for example, implemented as a metal shell including various metallic materials such as stainless steel. In various embodiments, the shell 311 may include at least a portion of a non-metallic material.

According to an embodiment, the terminal portion 312 of the socket 310 may include a plurality of terminals 313, 314, 315, 316, 317, and 318 and a support (not separately illustrated). In a first state of the tray 320, the plurality of terminals 313, 314, 315, 316, 317, and 318 may physically contact a plurality of terminals (not separately illustrated) of the external storage medium 330 disposed in the tray 320. Although not separately illustrated, positions and/or numbers of the plurality of terminals 313, 314, 315, 316, 317, and 318 are not limited to the illustrated example and may vary. The support may be coupled to the shell 311. The support may include a non-conductive body (or a non-metallic member or non-metallic structure) including a non-metallic material. The plurality of terminals 313, 314, 315, 316, 317, and 318 may be disposed in or coupled to the support. In the first state of the tray 320, a stable physical contact (or electrical connection) between the plurality of terminals 313, 314, 315, 316, 317, and 318 and the external storage medium 330 disposed in the tray 320 may be provided (or formed) by a combination of the shell 311 and the support supporting the plurality of terminals 313, 314, 315, 316, 317, and 318.

According to an embodiment, the plurality of terminals 313, 314, 315, 316, 317, and 318 may be provided (or formed) as elastic terminals or elastic contact terminals that may elastically contact the plurality of terminals of the external storage medium 330. The plurality of terminals 313, 314, 315, 316, 317, and 318 may include, for example, a plurality of conductive elastic bodies supported by a support (not separately illustrated) of the terminal portion 312 and having elasticity.

According to various embodiments, the slot guiding insertion of the tray 320 in the socket 310 may be provided (or formed) by a combination of supports (not separately illustrated) of the shell 311 and the terminal portion 312.

According to an embodiment, the socket 310 may be electrically connected to the printed circuit board 350 accommodated in the housing 20. The plurality of terminals 313, 314, 315, 316, 317, and 318 of the socket 310 may be electrically connected to the printed circuit board 350. The shell 311 (e.g., metal shell) of the socket 310 may be electrically connected to the printed circuit board 350.

According to an embodiment, the plurality of terminals 313, 314, 315, 316, 317, and 318 of the socket 310 may be electrically connected to a processor (e.g., the processor 120 of FIG. 1) disposed on the printed circuit board 350 via a plurality of signal lines (e.g., a plurality of electrical paths, a plurality of conductive paths, conductive lines) included in the printed circuit board 350. In various embodiments, the second exemplary electronic device 2 may include another printed circuit board (not separately illustrated) electrically connected to the printed circuit board 350 via an electrical connector such as a flexible printed circuit board (not separately illustrated), and the processor may be disposed on the other printed circuit board.

According to an embodiment, the shell 311 (e.g., metal shell) of the socket 310 may be electrically connected to a ground area (e.g., a combination of one or more ground planes) (not separately illustrated) of the printed circuit board 350. The second exemplary electronic device 2 may include a ground structure (not separately illustrated) for reducing or preventing electromagnetic interference (EMI) to a plurality of electrical elements. The ground structure of the second exemplary electronic device 2 may be implemented as a combination of a plurality of conductive portions (or a plurality of conductive areas or a plurality of conductive structures) included in the second exemplary electronic device 2. The ground area of the shell 311 and the printed circuit board 350 may be part of the ground structure of the second exemplary electronic device 2. The shell 311 may, for example, reduce or prevent electromagnetic interference to the external storage medium 330 electrically connected to the printed circuit board 350.

According to an embodiment, the socket 310 may be disposed on the printed circuit board 350. The socket 310 may be, for example, electrically and physically connected to the printed circuit board 350 via a conductive adhesive material (or bonding material) (not separately illustrated) such as solder.

According to an embodiment, the socket 310 may be disposed on the printed circuit board 350 between the front plate 21 and the printed circuit board 350.

According to an embodiment, when viewed from above the front plate 21, the socket 310 may at least partially overlap with the display module 201.

According to various embodiments, the socket 310 may be disposed on the printed circuit board 350 between the rear plate 23 and the printed circuit board 350.

According to various embodiments, the socket 310 may be disposed in or coupled to the housing 20 or a support (not separately illustrated) accommodated in the housing 20, and be electrically connected to the printed circuit board 350 via an electrical connector (or electrical connecting member) such as a flexible printed circuit board (not separately illustrated).

According to various embodiments, the plurality of terminals 313, 314, 315, 316, 317, and 318 of the socket 310 may be disposed on the printed circuit board 350, and a support (not separately illustrated) of the terminal portion 312 may be provided (or formed) in a form including an opening that does not interfere a physical contact between the plurality of terminals 313, 314, 315, 316, 317, and 318 and the external storage medium 330.

According to various embodiments, the plurality of terminals 313, 314, 315, 316, 317, and 318 of the socket 310 may be disposed on the printed circuit board 350. A support (not separately illustrated) of the terminal portion 312 may be omitted, and the shell 311 may be disposed on or coupled to the printed circuit board 350 via a conductive adhesive material (or bonding material) such as solder. A slot guiding insertion of the tray 320 may be provided (or formed) by a combination of the shell 311 and the printed circuit board 350.

According to an embodiment, the tray 320 may include a first part 321 and a second part 322. In the first state of the tray 320, the first part 321 may be positioned in the tray hole 246 of the first side surface portion 241. The second part 322 may extend from the first part 321 or be connected to the first part 321. For example, the tray 320 may be provided (or formed) as an integrated or single structure (e.g., a single continuous structure or a complete structure) including the first part 321 and the second part 322. The external storage medium 330 may be removably attached to the second part 322. In the first state of the tray 320, the second part 322 may be inserted into the socket 310. The first part 321 may be referred to as a 'head' of the tray 320, and the second part 322 may be referred to as an 'external storage medium support' of the tray 320.

According to an embodiment, the tray hole 246 of the first side surface portion 241 may include a recess into which the first part 321 (e.g., head) of the tray 320 may be fitted. The first state of the tray 320 may refer to a state in which the first part 321 is fitted into the tray hole 246. In the first state of the tray 320, the first part 321 may provide (or form) a portion of the side surface 20C of the second exemplary electronic device 2. In the first state of the tray 320, a partial surface area included in the first part 321 of the tray 320 among the side surface 20C of the second exemplary electronic device 2 may be substantially smoothly connected with a partial surface area included in the side surface portion 24 among the side surface 20C of the second exemplary electronic device 2.

According to an embodiment, the second part 322 of the tray 320 may be provided (or formed) in a plate shape that may be inserted into the slot of the socket 310. The second part 322 may include a recess in which the external storage medium 330 in the form of a plate may be seated. The second part 322 may include an opening 323 provided (or formed) corresponding to the recess. In the first state of the tray 320, the plurality of terminals 313, 314, 315, 316, 317, and 318 of the socket 310 may physically contact a plurality of terminals (not separately illustrated) of the external storage medium 330 through the opening 323.

According to an embodiment, the external storage medium 330 may include a SIM card or a universal SIM (USIM) card.

According to various embodiments, the external storage medium 330 may include a memory card such as a compact flash (CF), a multi-media card (MMC), a smart media card (SMC), a secure disk (SD), or a memory stick (MS).

According to various embodiments, in the illustrated example, the combination of the socket 310 and the tray 320 is disclosed for one external storage medium 330, but is not limited thereto, and although not separately illustrated, may also be implemented for a plurality of external storage media (e.g., two or three external storage media).

According to an embodiment, the first microphone 341 may be electrically connected to the printed circuit board 350.

According to an embodiment, the first hole H1 (e.g., single hole) included in the side surface portion 24 of the frame 22 may be utilized as a microphone hole corresponding to the first microphone 341 as well as a pin hole utilized to separate the tray 320 from the socket 310. When the tray 320 is separated from the socket 310, a pin 361 of a tool 360 may be inserted through the first hole H1. The tool 360 may be, for example, referred to by various other terms such as a 'tray separation tool', a 'tray ejector', a 'tray separation pin', or a 'tray ejector pin'. With reference to 301 and 302 of FIG. 3, when the pin 361 of the tool 360 is inserted into the first hole H1, the tray 320 may be pushed out from the socket 310 by an insertion force of the pin 361 and protrude relative to the first side surface portion 241. With reference to 302, 303, and 304 of FIG. 3, after the tray 320 protruding relative to the first side surface portion 241 is pulled out from the second exemplary electronic device 2, the external storage medium 330 may be separated from the tray 320. Hereinafter, a 'second state of the tray 320' may refer to a state in which the pin 361 of the tool 360 is inserted into the first hole H1 and in which the tray 320 protrudes relative to the first side surface portion 241 (see 302 of FIG. 3).

According to an embodiment, the socket 310 may include an actuator (e.g., an actuator 500 of FIG. 4). The actuator may move the tray 320 using a force received from the pin 361 of the tool 360 inserted through the first hole H1.

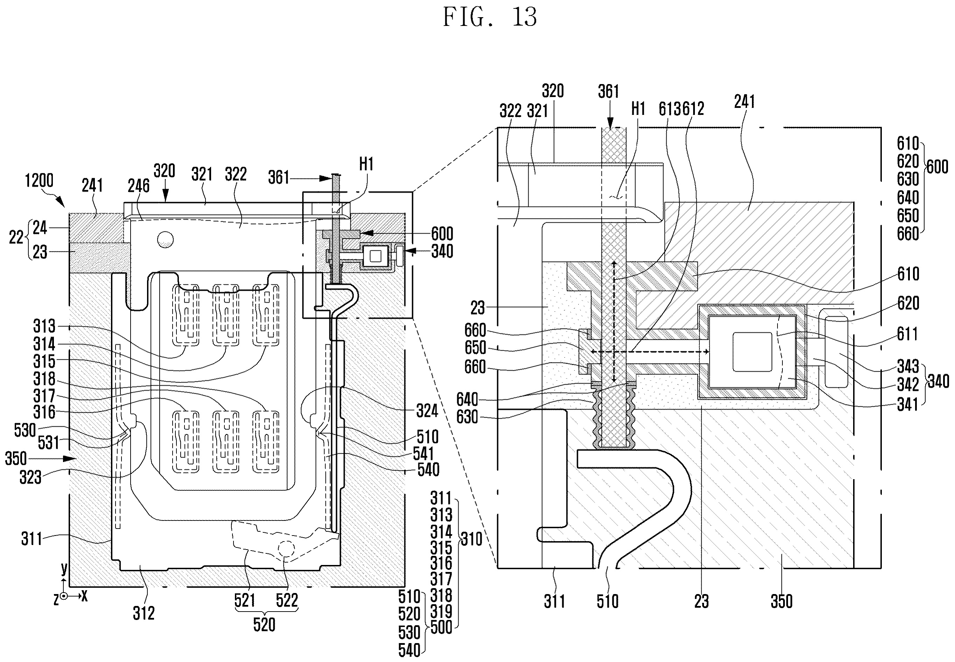

According to various embodiments, the first hole H1 may be provided (or formed) in the tray 320 (see FIG. 13).

According to an embodiment, the second exemplary electronic device 2 may include a passage structure assembly (e.g., a passage structure assembly 600 of FIG. 4) accommodated in the housing 20 corresponding to the first hole H1. The passage structure assembly may guide a movement of sound so that sound from outside the second exemplary electronic device 2 introduced through the first hole H1 is transmitted to the first microphone 341. The passage structure assembly may guide insertion of the pin 361 of the tool 360. The passage structure assembly serves as a structural element for guiding sound transmission (or movement) and for guiding movement of the pin 361, and may also be referred to by various other terms such as a 'guide assembly', 'guide member assembly', or 'guide structure assembly'.

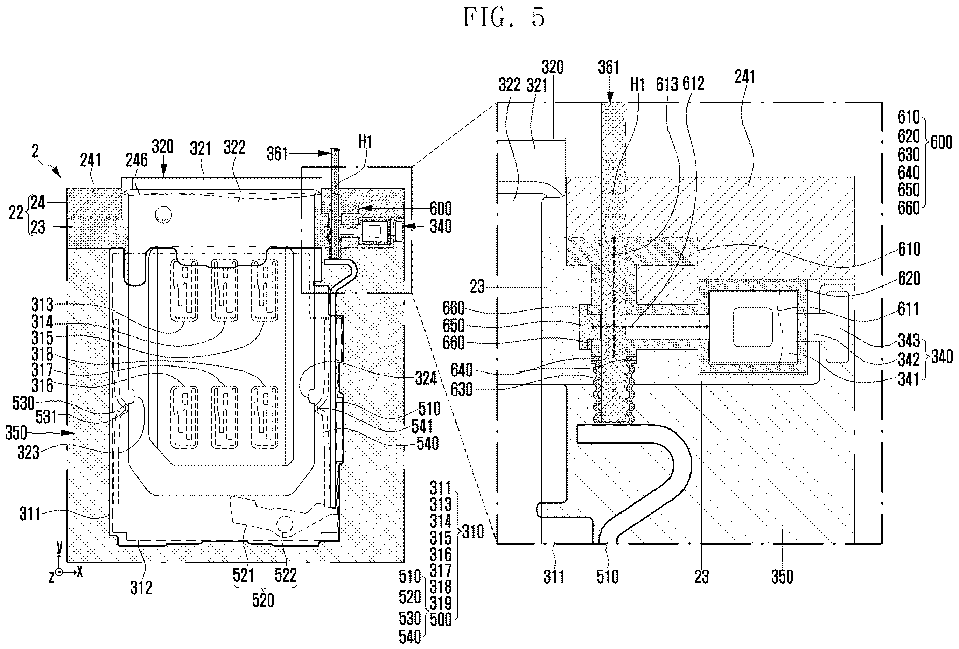

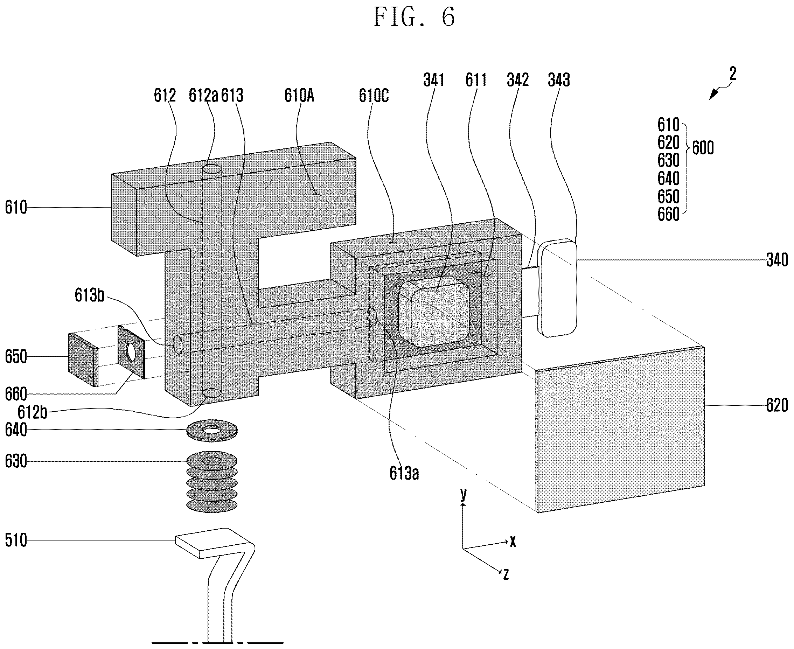

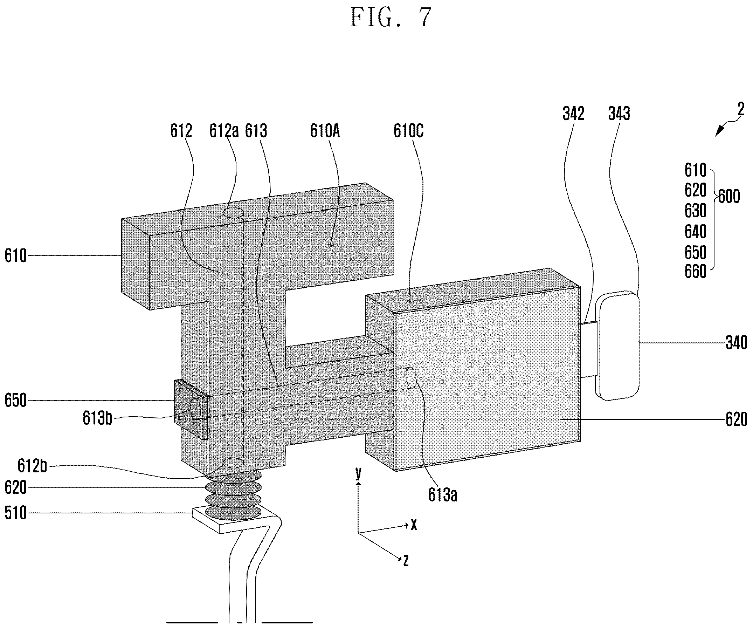

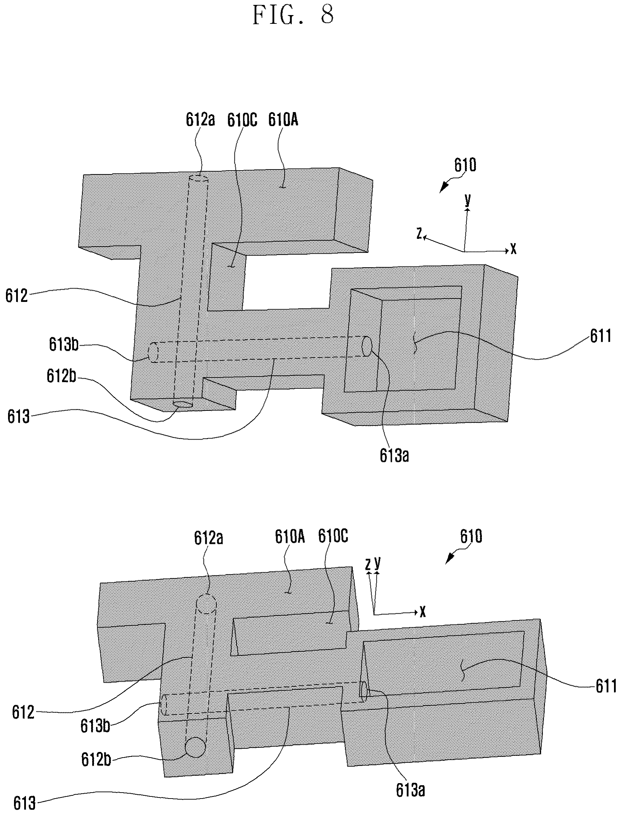

FIG. 4 is a diagram and cross-sectional view illustrating a portion of the second exemplary electronic device 2 in a first state of the tray 320 according to an embodiment of the disclosure. FIG. 5 is a cross-sectional view illustrating a portion of the second exemplary electronic device 2 in a second state of the tray 320 according to an embodiment of the disclosure. FIG. 6 is an exploded perspective view illustrating a portion of the second exemplary electronic device 2 according to an embodiment of the disclosure. FIG. 7 is a perspective view illustrating a portion of the second exemplary electronic device 2 according to an embodiment of the disclosure. FIG. 8 is a perspective view illustrating a passage structure 610 according to an embodiment of the disclosure. It should be understood that all combinations of features and/or embodiments disclosed in connection with FIGS. 4, 5, 6, 7, and 8 are encompassed and included by the disclosure. That is, all combinations of features described below in connection with FIGS. 4, 5, 6, 7, and 8 should be considered to be included in the disclosure as specific examples.

With reference to FIGS. 4, 5, 6, 7, and 8, the second exemplary electronic device 2 may include a frame 22, a socket 310, a tray 320, an external storage medium 330, a first sound input module 340, a printed circuit board 350, and/or a passage structure assembly 600.

According to an embodiment, the frame 22 may include a rear portion 23 and a side surface portion 24. A first side surface portion 241 of the side surface portion 24 may include a tray hole 246 and a first hole H1.

According to an embodiment, the socket 310 may be positioned inside the second exemplary electronic device 2 corresponding to the tray hole 246 of the frame 22. The socket 310 may include a shell 311 and a terminal portion 312, and/or an actuator 500. The terminal portion 312 may include a support (e.g., non-conductive support) (not separately illustrated) and a plurality of terminals 313, 314, 315, 316, 317, and 318 disposed on the support.

According to an embodiment, when the tray 320 is switched from a first state to a second state, the actuator 500 may move the tray 320 using a force received from the pin 361 inserted through the first hole H1, thereby switching a relative position of the tray 320 with respect to the socket 310 from a first position of the first state to a second position of the second state.

According to an embodiment, the actuator 500 may include a shaft 510, a seesaw (or seesaw structure) 520, a first elastic body (or first elastic member or first elastic structure) 530, and/or a second elastic body (or second elastic member or second elastic structure) 540.

According to an embodiment, the shaft 510 may be disposed in the socket 310 to enable a linear motion. The socket 310 may include a linear motion guide (not separately illustrated) provided (or formed) by a support (not separately illustrated) of the shell 311 or the terminal portion 312, or a combination of supports of the shell 311 and the terminal portion 312. The shaft 510 may be supported by the linear motion guide to enable a linear motion. The linear motion guide may include, for example, a rail or a rail structure that guides the linear motion of the shaft 510.

According to an embodiment, when the pin 361 is inserted through the first hole H1 by an external force and moves linearly in the first direction (e.g., -y axis direction), the shaft 510 may move linearly in the first direction due to a force received from the pin 361.

According to an embodiment, the seesaw 520 may include a lever 521 that may tilt about a rotation axis (rotation shaft or fulcrum) 522. One side of the lever 521 may support the shaft 510 and the other side of the lever 521 may support the tray 320 about the rotation axis 522. The seesaw 520 may switch between a linear motion of the shaft 510 and a linear motion of the tray 320. When the tray 320 is switched from the first state to the second state, the pin 361 is inserted through the first hole H1 so that the shaft 510 moves linearly in the first direction (e.g., direction), and the tray 320 may move linearly in the second direction (e.g., +y-axis direction) substantially opposite to the first direction through motion switch by the seesaw 520. When the tray 320 is switched from the second state to the first state, the tray 320 may move linearly in the first direction (e.g., - y-axis direction) so that it is fully inserted into the socket 310, and the shaft 510 may move linearly in the second direction (e.g., +y-axis direction) through motion switch by the seesaw 520.

According to an embodiment, the first elastic body 530 and the second elastic body 540 may be elastically interposed between the shell 511 or the support 512, or a combination of the shell 511 and the support 512 and the tray 320. The first elastic body 530 and the second elastic body 540 may be positioned at both sides with the tray 320 interposed therebetween, when viewed from above the front plate 21 (e.g., when viewed in the -z-axis direction). The first elastic body 530 may elastically support one side surface of the tray 320, and the second elastic body 540 may elastically support the other side surface of the tray 320. When the tray 320 is switched between the first state and the second state, the tray 320 may be moved stably by being elastically supported by the first elastic body 530 and the second elastic body 540.

According to an embodiment, the first elastic body 530 may include a first spring (e.g., first plate spring) formed by bending an elastic metal plate. The first elastic body 530 (e.g., first plate spring) may include a first contact portion 531 in a bent shape so as to elastically contact one side surface of the tray 320. The second elastic body 540 may include a second spring (e.g., second plate spring) formed by bending an elastic metal plate. The second elastic body 540 (e.g., second plate spring) may include a second contact portion 541 in a bent shape so as to elastically contact the other side surface of the tray 320.

According to an embodiment, the tray 320 may include a first groove (or first recess) 323 provided (or formed) in one side surface corresponding to the first elastic body 530. The tray 320 may include a second groove (or second recess) 324 provided (or formed) in the other side surface corresponding to the second elastic body 540. In the first state of the tray 320, the first contact portion 531 of the first elastic body 530 may be inserted into the first groove 323 of the tray 320, and the second contact portion 541 of the second elastic body 540 may be inserted into the second groove 324 of the tray 320. Insertion of the first contact portion 531 into the first groove 323 and insertion of the second contact portion 541 into the second groove 324 may provide (or form) a fastening force between the socket 310 and the tray 320 so that the first state of the tray 320 may be maintained.

According to an embodiment, when the tray 320 is switched from the first state to the second state, an external force transmitted to the shaft 510 through the pin 361 may move the tray 320 so that fastening between the first contact portion 531 of the first elastic body 530 and the first groove 323 of the tray 320 and fastening between the second contact portion 541 of the second elastic body 540 and the second groove 324 of the tray 320 are released. In the second state of the tray 320, relative positions of the socket 310 and the tray 320 may be provided (or formed) such that the first contact portion 531 of the first elastic body 530 is removed from the first groove 323 of the tray 320 and that the second contact portion 541 of the second elastic body 540 is removed from the second groove 324 of the tray 320.

According to an embodiment, the combination of the first elastic body 530, the first groove 323 of the tray 320, the second elastic body 540, and the second groove 324 of the tray 320 may provide an operation feeling when the tray 320 is switched between the first state and the second state.

According to an embodiment, the first sound input module 340 may include a first microphone 341, a flexible printed circuit board 342, and/or a second connector 343. The first microphone 341 may be disposed at one end of the flexible printed circuit board 342, and the second connector 343 may be disposed at the other end of the flexible printed circuit board 342. The first microphone 341 may be electrically connected to the printed circuit board 350 through an electrical connection between the second connector 343 and a connector (not separately illustrated) disposed on the printed circuit board 350.

According to an embodiment, the printed circuit board 350 may be disposed on the rear portion 23 of the frame 22.

According to various embodiments, the printed circuit board 350 may be disposed on an internal support (or support member, support, or support portion) (e.g., bracket) (not separately illustrated) located inside the second exemplary electronic device 2. The internal support may be disposed between the front plate 21 and the rear portion 23 (see FIG. 2) of the frame 22. The internal support may be connected to the rear portion 23 and/or the side surface portion 24 of the frame 22. Some of the plurality of electrical elements included in the second exemplary electronic device 2 may be disposed in or coupled to the internal support between the front plate 21 and the internal support or may be supported by the internal support. Other of the plurality of electrical elements included in the second exemplary electronic device 2 may be disposed in or coupled to the internal support between the rear portion 23 of the frame 22 and the internal support or may be supported by the internal support. The inner support may include at least one conductive portion and/or at least one non-conductive portion. The inner support may be, for example, provided (or formed) as a combination of at least one conductive portion and at least one non-conductive portion. In various embodiments, the inner support may be interpreted as a part of the frame 22.

According to an embodiment, the passage structure assembly 600 may include a passage structure (or passage member or passage body) 610, a cover 620, a third elastic body (or a third elastic member or a third elastic structure) 630, a first adhesive material (or a first bonding material) 640, a seal 650, and/or a second adhesive material (or a second bonding material) 660.

According to an embodiment, the passage structure 610 of the passage structure assembly 600 may include a first surface 610A, a second surface (not separately illustrated), and/or a third surface 610C. The first surface 610A may, for example, face at least partially toward the front surface 20A (see FIG. 2) of the second exemplary electronic device 2. The second surface may, for example, face at least partially toward the rear surface 20B (see FIG. 2) of the second exemplary electronic device 2. The third surface 610C may provide (or form) at least a portion of a side surface (or lateral surface) of the passage structure 610 connecting the first surface 610A and the second surface 610B. The passage structure 610 is not limited to the illustrated examples and may be provided (or formed) in various other forms.

According to an embodiment, the passage structure 610 may be provided (or formed) as an integrated or single structure (e.g., a single continuous structure or complete structure).

According to various embodiments, although not separately illustrated, the passage structure 610 may be provided (or formed) by combination or coupling of a plurality of parts. The plurality of parts may be coupled, for example, through mechanical fastening such as screw fastening, and/or bonding using an adhesive material (or bonding material).

According to an embodiment, the passage structure 610 may be disposed in or coupled to the frame 22 within the second exemplary electronic device 2. The passage structure 610 may be, for example, connected to the rear portion 23 of the frame 22. The passage structure 610 may be, for example, connected to the first side surface portion 241 of the frame 22.

According to an embodiment, the passage structure 610 may be coupled to the frame 22 via an adhesive material (or bonding material).

According to an embodiment, the passage structure 610 may be coupled to the frame 22 through mechanical fastening such as screw fastening.

According to various embodiments, the frame 22 may be provided (or formed) in a form including the passage structure 610. The passage structure 610 may be defined or interpreted as a part of the frame 22.

According to various embodiments, the passage structure 610 may be disposed on an internal support (or support member, support, or support portion) (e.g., bracket) (not separately illustrated) located inside the second exemplary electronic device 2, or may be implemented as a part of the internal support.

According to various embodiments, the passage structure 610 may include a metallic material.

According to various embodiments, the passage structure 610 may include a non-metallic material.

According to various embodiments, the passage structure 610 may be provided (or formed) by a combination of a conductive portion of a metallic material and a non-conductive portion of a non-metallic material.

According to an embodiment, the passage structure 610 may include a recess 611, a first passage 612, and/or a second passage 613.

According to an embodiment, the recess 611 of the passage structure 610 may be provided (or formed) in the first surface 610A of the passage structure 610. The recess 611 may include, for example, a recessed partial area of the first surface 610A.

According to an embodiment, the recess 611 may have a space in which the first microphone 341 of the first sound input module 340 and a portion of the flexible printed circuit board 342 of the first sound input module 340, on which the first microphone 341 is disposed, are disposed.

According to an embodiment, some of the first sound input modules 340 disposed in the recess 611 of the passage structure 610 may be disposed in or coupled to the passage structure 610 through an adhesive material (or bonding material) (not separately illustrated).

According to an embodiment, the flexible printed circuit board 342 of the first sound input module 340 may penetrate an opening (not separately illustrated) provided (or formed) in the passage structure 610. The second connector 343 disposed on the flexible printed circuit board 342 may be located outside the passage structure 610.

According to various embodiments, the first microphone 341 may be disposed on the printed circuit board 350 via a conductive adhesive material (or bonding material) such as solder. The flexible printed circuit board 342 and the second connector 343 may be omitted. The passage structure 610 may include an opening (not separately illustrated) corresponding to the first microphone 341 disposed on the printed circuit board 350, instead of the recess 611. The first microphone 341 may be positioned in the space among the printed circuit board 350, the passage structure 610, and the cover 620.

According to an embodiment, the first passage 612 of the passage structure 610 may extend from a first opening 612a corresponding to the first hole H1 of the first side surface portion 241 of the frame 22 to a second opening 612b corresponding to the shaft 510. The first opening 612a may be provided (or formed) in a surface of the third surface 610C of the passage structure 610, the surface facing the first hole H1. The second opening 612b may be provided (or formed) in the other surface of the third surface 610C of the passage structure 610, the surface facing the shaft 510. The first passage 612 may extend substantially straight.

According to an embodiment, when the tray 320 is switched from the first state to the second state, the first passage 612 of the passage structure 610 may extend from the first opening 612a to the second opening 612b substantially parallel to the first direction (e.g., direction) in which the pin 361 inserted through the first hole H1 and the shaft 510 pressed by the pin 361 move linearly.

According to an embodiment, when the tray 320 is switched from the first state to the second state, the pin 361 may enter the first passage 612 of the passage structure 610 via the first hole H1. The first passage 612 of the passage structure 610 may guide a linear movement of the pin 361 in the first direction (e.g., direction) when the tray 320 is switched from the first state to the second state. When the tray 320 is switched from the first state to the second state, the pin 361 inserted through the first hole H1 may be guided by the first passage 612 to linearly move in the first direction (e.g., direction).

According to an embodiment, the second passage 613 of the passage structure 610 may extend from the recess 611 of the passage structure 610 in which the first microphone 341 is positioned. The second passage 613 may extend from a third opening 613a provided (or formed) in one surface of the recess 611 to a fourth opening 613b provided (or formed) in the other surface of the third surface 610C of the passage structure 610. The second passage 613 may be disposed across the first passage 612. The first passage 612 and the second passage 613 may intersect each other.

According to an embodiment, the second passage 613 of the passage structure 610 may extend substantially straight.

According to an embodiment, when viewed from above the front plate 21 (e.g., when viewed in the -z-axis direction), the first passage 612 and the second passage 613 of the passage structure 610 may intersect each other substantially perpendicularly.

According to various embodiments, although not separately illustrated, when viewed from above the front plate 21, the first passage 612 and the second passage 613 of the passage structure 610 may intersect each other at an acute angle (or an obtuse angle).

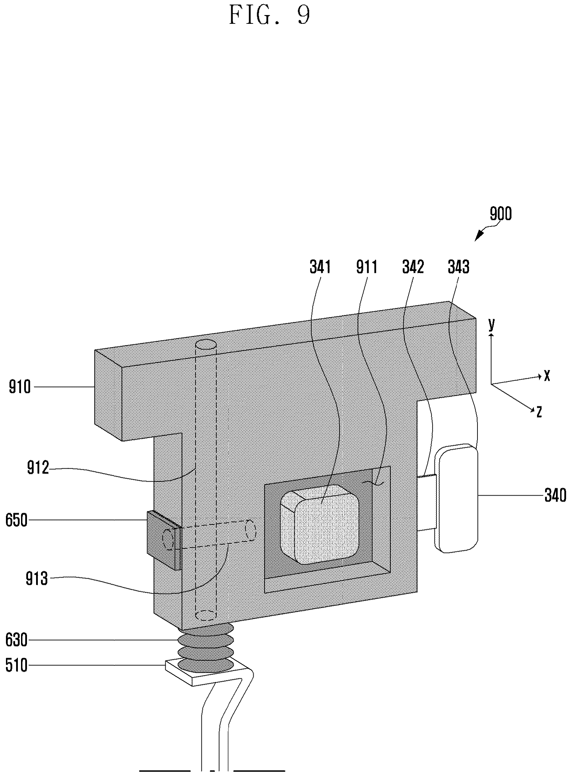

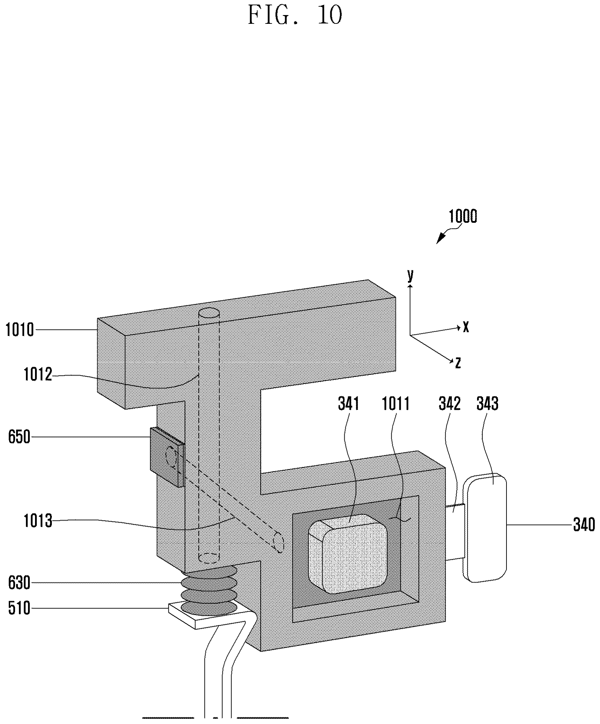

According to an embodiment, the passage structure 610 may be provided (or formed) in a form in which two parts intersect each other, corresponding to the first passage 612 and the second passage 613, when viewed from above the front plate 21. The passage structure 610 is not limited to the illustrated example and may be provided in various other forms (e.g., a passage structure 910 of FIG. 9 or a passage structure 1010 of FIG. 10) including the recess 611, the first passage 612, and the second passage 613. The passage structure 610 may be, for example, modified differently from the illustrated example according to relative positions among the socket 310, the first hole H1, and the first microphone 341. The passage structure 610 may be, for example, modified differently from the illustrated example in consideration of structural interference with surrounding components.

According to various embodiments, although not separately illustrated, the passage structure 610 may be provided (or formed) by a combination of a plurality of parts, and at least a portion of the recess 611, the first passage 612, and/or the second passage 613 may be provided (or formed) by a combination of a plurality of parts.

According to an embodiment, the cover 620 of the passage structure assembly 600 may be coupled with the passage structure 610 so as to cover the recess 611 of the passage structure 610. The cover 620 may be, for example, coupled with the passage structure 610 via an adhesive material (or bonding material). The cover 620 may be, for example, coupled with the passage structure 610 via mechanical fastening such as screw fastening. The first microphone 341 of the first sound input module 340 and a portion of the flexible printed circuit board 342 of the first sound input module 340, on which the first microphone 341 is disposed, may be disposed in a space between the passage structure 610 corresponding to the recess 6110 and the cover 620.

According to various embodiments, a portion (not separately illustrated) included or disposed in the display module 201 may replace the cover 620.

According to an embodiment, the third elastic body (or third elastic member or third elastic structure) 630 of the passage structure assembly 600 may be positioned between the passage structure 610 and the shaft 510 of the socket 310. The third elastic body 630 may be disposed in or coupled to the passage structure 610. The third elastic body 630 may block the second opening 612b of the first passage 612 included in the passage structure 610.

According to an embodiment, the first adhesive material (or first bonding material) 640 of the passage structure assembly 600 may be disposed between the passage structure 610 and the third elastic body 630. The third elastic body 630 may be disposed in or coupled to the passage structure 610 via the first adhesive material 640.

According to an embodiment, when the tray 320 is switched from the first state to the second state, the pin 361 inserted through the first hole H1 may move in the first direction (e.g., direction) in the first passage 612 of the passage structure 610 to press the third elastic body 630. When the tray 320 is switched from the first state to the second state, the third elastic body 630 may be elongated due to the linear movement of the pin 361 in the first direction, and the shaft 510 of the socket 310 may be linearly moved in the first direction.

According to various embodiments, the second exemplary electronic device 2 may include a third adhesive material (or third bonding material) (not separately illustrated) disposed between the elastic body 630 and the shaft 510. The elastic body 630 may be coupled to the shaft 510 via the third adhesive material.

According to an embodiment, the third elastic body 630 may include a pleated structure. The pleated structure may facilitate smooth elongation of the third elastic body 630 in response to a movement of the pin 361 in the first direction (e.g., the direction) when the tray 320 is switched from the first state to the second state.

According to an embodiment, the third elastic body 630 may include a recess into which the pin 361 may be inserted when the tray 320 is switched from the first state to the second state.

According to various embodiments, the third elastic body 630 may include various flexible materials such as rubber.

According to various embodiments, the third elastic body 630 is not limited to the form of the illustrated example and may be provided (or formed) in various other forms. The third elastic body 630 may include, for example, a flexible film (not separately illustrated).

According to an embodiment, the seal 650 of the passage structure assembly 600 may be disposed in or coupled to the passage structure 610 so as to block the fourth opening 613b of the passage structure 610.

According to an embodiment, the second adhesive material (or second bonding material) 660 of the passage structure assembly 600 may be disposed between the seal 650 and the passage structure 610. The seal 650 may be disposed in or coupled to the passage structure 610 via the second adhesive material 660.

According to an embodiment, the seal 650 may include an elastic body or elastic member including a flexible material such as rubber.

According to an embodiment, the seal 650 may be inserted into a portion of the second passage 613 of the passage structure 610. For example, a portion of the seal 650 including a flexible material and inserted into the second passage 613 may elastically contact an inner surface of the second passage 613. The seal 650 may be disposed in the passage structure 610 so as not to interfere a movement of the pin 361 when the tray 320 is switched from the first state to the second state.

According to various embodiments, the seal 650 may be substantially rigid.

According to an embodiment, sound from outside the second exemplary electronic device 2 introduced through the first hole H1 may be transmitted to the first microphone 341 through a sound path (or sound transmission path) provided by a combination of the first passage 612 and the second passage 613 of the passage structure assembly 600.

According to an embodiment, the third elastic body 630 and the first adhesive material 640 may reduce or prevent sound from outside the second exemplary electronic device 2 introduced through the first hole H1 from leaking out of the passage structure 610 through the second opening 612b of the first passage 612 included in the passage structure 610.

According to an embodiment, the seal 650 and the second adhesive material 660 may reduce or prevent sound from outside the second exemplary electronic device 2 introduced through the first hole H1 from leaking out of the passage structure 610 through the fourth opening 613b of the second passage 613 included in the passage structure 610.

According to various embodiments, although not separately illustrated, the second passage 613 may be provided (or formed) as a combination of one or more straight sections, a combination of one or more curved sections, or a combination of at least one straight section and at least one curved section.

According to various embodiments, although not separately illustrated, the passage structure 610 may be implemented so that the fourth opening 613b of the second passage 613 is provided (or formed) in an inner surface of the first passage 612. The seal 650 and the second adhesive material 660 may be omitted.

According to various embodiments, the passage structure 610 serves as a structural element for guiding sound transmission (or movement) and for guiding movement of the pin 361, and may also be referred to by various other terms such as a 'guide' or a 'guide member'.

Hereinafter, various exemplary electronic devices are described with reference to the attached drawings. Any exemplary electronic device may be interpreted as falling within the scope of various embodiments of the disclosure by changing or modifying at least some of a plurality of components of another exemplary electronic device. In the description of any exemplary electronic device, the same terminology and/or reference numerals may be used for components that are at least partially identical, similar, or related to components of another exemplary electronic device. In any two exemplary electronic devices, two components having the same terminology but different reference numerals may be understood to be substantially identical or to have altered or modified forms.

FIG. 9 is a perspective view illustrating a portion of a third exemplary electronic device 900 according to various embodiments of the disclosure. It should be understood that all combinations of features and/or embodiments disclosed in connection with FIG. 9 are contemplated and encompassed by the disclosure. That is, all combinations of features described below in connection with FIG. 9 should be considered to be included in the disclosure as specific examples.

With reference to FIG. 9, the third exemplary electronic device 900 may include a passage structure 910, a third elastic body 630, a seal 650, a first sound input module 340, and/or a shaft 510. The combination of the passage structure 910, the third elastic body 630, and the seal 650 may at least partially provide (or form) a passage structure assembly (e.g., the passage structure assembly 600 of FIG. 4) corresponding to the first hole H1 (see FIG. 3), the socket 310 (see FIG. 3), and the first sound output module 340. A description of at least one identical component that has been described with reference to FIGS. 4 and 5 among a plurality of components disclosed in FIG. 9 is omitted.

According to various embodiments, the passage structure 910 may be provided (or formed) in a modified form of the passage structure 610 of FIG. 6. The passage structure 910 may include a recess 911 (e.g., the recess 611 of FIG. 6), a first passage 912 (e.g., the first passage 612 of FIG. 6), and/or a second passage 913 (e.g., the second passage 613 of FIG. 6).

According to various embodiments, the passage structure 910 is not limited to an integrated or single structure (e.g., a single continuous structure or a complete structure), but may be provided (or formed) by a combination of a plurality of parts (not separately illustrated). At least a portion of the recess 911, the first passage 912, and/or the second passage 913 may be provided (or formed) by a combination of a plurality of parts.

According to various embodiments, although not separately illustrated, the second passage 913 may be provided (or formed) as a combination of one or more straight sections, a combination of one or more curved sections, or a combination of at least one straight section and at least one curved section.

According to various embodiments, although not separately illustrated, the passage structure 910 may be implemented so that a fourth opening 913b of the second passage 913 is provided (or formed) in an inner surface of the first passage 912. The seal 650 and the second adhesive material 660 may be omitted.

FIG. 10 is a perspective view illustrating a portion of a fourth exemplary electronic device 1000 according to various embodiments of the disclosure. It should be understood that all combinations of features and/or embodiments disclosed in connection with FIG. 10 are encompassed and included by the disclosure. That is, all combinations of features described below in connection with FIG. 10 should be considered to be included in the disclosure as specific examples.

With reference to FIG. 10, the fourth exemplary electronic device 1000 may include a passage structure 1010, a third elastic body 630, a seal 650, a first sound input module 340, and/or a shaft 510. The combination of the passage structure 1010, the third elastic body 630, and the seal 650 may at least partially provide (or form) a passage structure assembly (e.g., the passage structure assembly 600 of FIG. 4) corresponding to the first hole H1 (see FIG. 3), the socket 310 (see FIG. 3), and the first sound output module 340. A description of at least one identical component that has been described with reference to FIGS. 4 and 5 among a plurality of components disclosed in FIG. 10 is omitted.

According to an embodiment, the passage structure 1010 may be provided (or formed) in a modified form of the passage structure 610 of FIG. 6. The passage structure 1010 may include a recess 1011 (e.g., the recess 611 of FIG. 6), a first passage 1012 (e.g., the first passage 612 of FIG. 6), and/or a second passage 1013 (e.g., the second passage 613 of FIG. 6).

According to an embodiment, the first passage 1012 and the second passage 1013 of the passage structure 1010 may intersect at a non-perpendicular angle, when viewed from above the front plate 21 (see FIG. 2). For example, the first passage 1012 and the second passage 1013 may intersect each other at an acute angle (or an obtuse angle).

According to various embodiments, the passage structure 1010 is not limited to an integrated or single structure (e.g., a single continuous structure or a complete structure), but may be provided (or formed) by a combination of a plurality of parts (not separately illustrated). At least a portion of the recess 1011, the first passage 1012, and/or the second passage 1013 may be provided (or formed) by a combination of a plurality of parts.

According to various embodiments, although not separately illustrated, the second passage 1013 may be provided (or formed) as a combination of one or more straight sections, a combination of one or more curved sections, or a combination of at least one straight section and at least one curved section.

According to various embodiments, although not separately illustrated, the passage structure 1010 may be implemented so that a fourth opening 1013b of the second passage 1013 is provided (or formed) in an inner surface of the first passage 1012. The seal 650 and the second adhesive material 660 may be omitted.

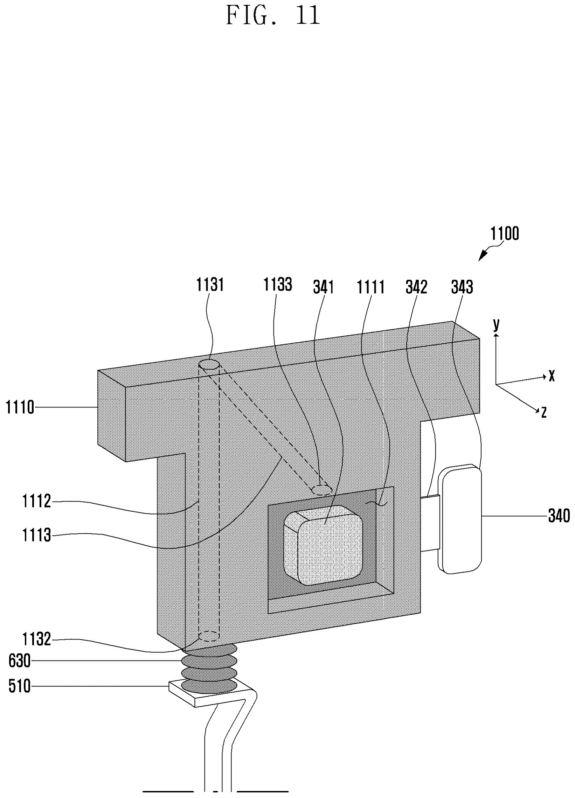

FIG. 11 is a perspective view illustrating a portion of a fifth exemplary electronic device 1100 according to various embodiments of the disclosure. It should be understood that all combinations of features and/or embodiments disclosed in connection with FIG. 11 are encompassed and included by the disclosure. That is, all combinations of features described below in connection with FIG. 11 should be considered to be encompassed by the disclosure as specific examples.

With reference to FIG. 11, the fifth exemplary electronic device 1100 may include a passage structure 1110, a third elastic body 630, a seal 650, a first sound input module 340, and/or a shaft 510. The combination of the passage structure 1110, the third elastic body 630, and the seal 650 may at least partially provide (or form) a passage structure assembly (e.g., the passage structure assembly 600 of FIG. 4) corresponding to the first hole H1 (see FIG. 3), the socket 310 (see FIG. 3), and the first sound output module 340. A description of at least one identical component that has been described with reference to FIGS. 4 and 5 among a plurality of components disclosed in FIG. 11 is omitted.

According to an embodiment, the passage structure 1110 may include a recess 1111 (e.g., the recess 611 of FIG. 6), a first passage 1112 (e.g., the first passage 612 of FIG. 6), and/or a third passage 1113.

According to an embodiment, the first passage 1112 of the passage structure 1110 may extend straight from the first opening 1131 (e.g., the first opening 612a of FIG. 6) corresponding to the first hole H1 (see FIG. 3) of the frame 22 to a second opening 1132 (e.g., the second opening 612b of FIG. 6) corresponding to the shaft 510.

According to an embodiment, the third passage 1113 of the passage structure 1110 may extend straight from the first opening 1131 to a third opening 1133 (e.g., the third opening 613a of FIG. 6) provided (or formed) in an inner surface of the recess 1111. The first passage 1112 and the third passage 1113 may form an acute angle, when viewed from above the front plate 21 (see FIG. 2).

According to an embodiment, sound from outside the fifth exemplary electronic device 1100 introduced through the first hole H1 (see FIG. 3) may be transmitted to the first microphone 341 through the third passage 1113.

According to various embodiments, the passage structure 1110 is not limited to an integrated or single structure (e.g., a single continuous structure or a complete structure), but may be provided (or formed) by a combination of a plurality of parts (not separately illustrated). At least a portion of the recess 1111, the first passage 1112, and/or the third passage 1113 may be provided (or formed) by a combination of a plurality of parts.

According to various embodiments, although not separately illustrated, the third passage 1113 may be provided (or formed) as a combination of one or more straight sections, a combination of one or more curved sections, or a combination of at least one straight section and at least one curved section.

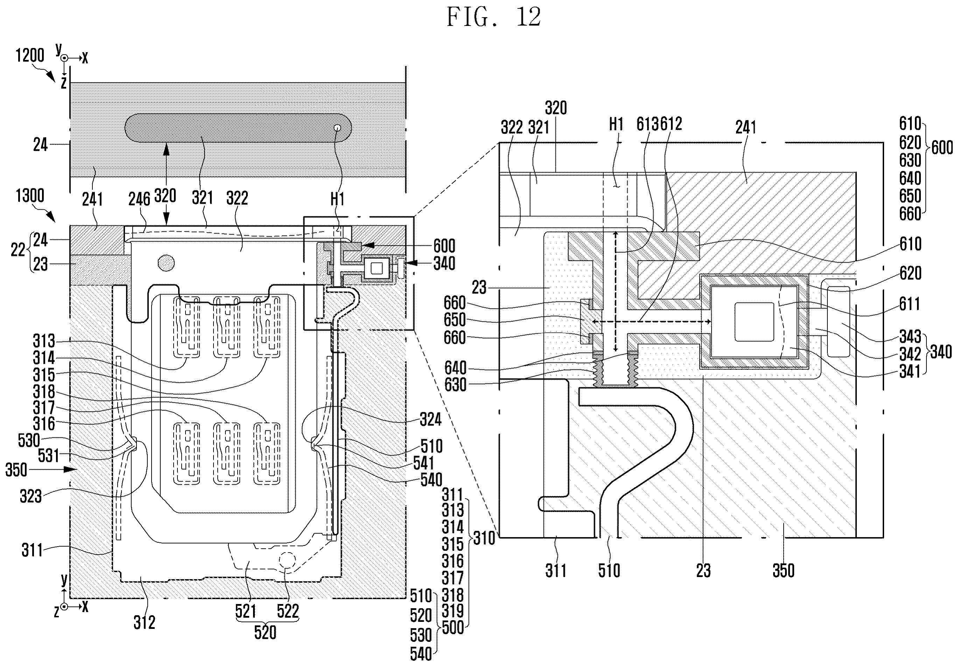

FIG. 12 is a diagram and cross-sectional view illustrating a portion of a sixth exemplary electronic device 1200 in a first state of the tray 320 according to various embodiments of the disclosure. FIG. 13 is a cross-sectional view illustrating a portion of a sixth exemplary electronic device 1200 in a second state of the tray 320 according to various embodiments of the disclosure. It should be understood that all combinations of features and/or embodiments disclosed in connection with FIGS. 12 and 13 are contemplated and encompassed by the disclosure. That is, all combinations of features described below in connection with FIGS. 12 and 13 should be considered to be encompassed by the disclosure as specific examples.

With reference to FIGS. 12 and 13, the sixth exemplary electronic device 1200 may include a frame 22, a socket 310, a tray 320, an external storage medium 330, a first sound input module 340, a printed circuit board 350, and/or a passage structure assembly 600. A description of at least one identical component that has been described with reference to FIGS. 4 and 5 among a plurality of components disclosed in FIGS. 12 and 13 is omitted.

According to an embodiment, the frame 22 may include a rear portion 23 and a side surface portion 24. A first side surface portion 241 of the side surface portion 24 may include a tray hole 246 corresponding to the socket 310.

According to an embodiment, the socket 310 may include a shell 311, a terminal portion 312 including a plurality of terminals 313, 314, 315, 316, 317, and 318, and/or an actuator 500. If the pin 361 inserted through the first hole H1 moves in the first direction (e.g., - y-axis direction) in the first passage 612 of the passage structure 610 when the tray 320 is switched from a first state to a second state, the actuator 500 may move the tray 320 in the second direction (e.g., +y-axis direction) using a force received from the pin 361. The actuator 500 may include a shaft 510, a seesaw 520, a first elastic body 530, and/or a second elastic body 540.

According to an embodiment, the tray 320 may include a first part 321 corresponding to the tray hole 246 of the frame 22 and a second part 322 configured to support the external storage medium 330.

According to an embodiment, the first part 321 (e.g., head) of the tray 320 may include a first hole H1. The first hole H1 may be utilized as a microphone hole corresponding to the first microphone 341 of the first sound output module 340, as well as a pin hole utilized to separate the tray 320 from the socket 310. When the tray 320 is separated from the socket 310, a pin 361 of a tool 360 may be inserted through the first hole H1.

According to an embodiment, the passage structure assembly 600 may be provided corresponding to the first hole H1, the socket 310, and the first sound output module 340 of the tray 320 and provide a guide for transmitting external sound to the first microphone 341 and a guide for movement of the pin 361 when the tray 320 is separated from the socket 310. The passage structure assembly 600 may include a passage structure 610, a cover 620, a third elastic body 630, a first adhesive material 640, a seal 650, and/or a second adhesive material 660.

According to various embodiments, although not separately illustrated, in the second exemplary electronic device 2 of FIG. 4, the third exemplary electronic device 900 of FIG. 9, the fourth exemplary electronic device 1000 of FIG. 10, the fifth exemplary electronic device 1100 of FIG. 11, or the sixth exemplary electronic device 1200 of FIG. 12, a sound output module including a speaker may replace the first sound input module 340. Sound output from the sound output module may be guided by the passage structure assembly and discharged to the outside through the first hole H1 (see FIG. 3).

According to various embodiments, although not separately illustrated, in the second exemplary electronic device 2 of FIG. 4, the third exemplary electronic device 900 of FIG. 9, the fourth exemplary electronic device 1000 of FIG. 10, the fifth exemplary electronic device 1100 of FIG. 11, or the sixth exemplary electronic device 1200 of FIG. 12, the passage structure assembly provided corresponding to the first hole H1, the socket 310, and the first sound output module 340 may be implemented in various other types such as a bar type (or plate type) electronic device, a foldable electronic device capable of folding a screen, and a slidable electronic device (or a rollable electronic device or a stretchable electronic device) capable of expanding or contracting a screen.

According to an exemplary embodiment of the disclosure, the electronic device (e.g., the second exemplary electronic device 2) includes a housing 20, a socket 310, a tray 320, a microphone (e.g., a first microphone 341), and/or a hole (e.g., a first hole H1). The housing 20 forms at least a portion of the exterior of the electronic device. The socket 310 is accommodated in the housing 20 corresponding to a tray hole 246 formed in the housing 20. The tray 320 is inserted into a connector through the tray hole 246. The tray 320 is configured to support an external storage medium 330. The microphone is accommodated in the housing 20. The hole is formed in the housing 20 or the tray 320. The electronic device is configured such that when a pin 361 is inserted through the hole, the tray 320 is separated from the socket 310. The electronic device is configured such that sound from outside the electronic device enters through the hole and is transmitted to the microphone.

According to an exemplary embodiment of the disclosure, the electronic device (e.g., the second exemplary electronic device 2) may include a passage structure 610. The passage structure 610 may guide a movement of the pin 361. The passage structure 610 may guide sound introduced into a hole (e.g., a first hole H1) from outside the electronic device to a microphone (e.g., a first microphone 341).

According to an exemplary embodiment of the disclosure, the socket 310 may include a shaft 510 for receiving a force from the pin 361. The passage structure 610 may include a first passage 612 and a second passage 613. The first passage 612 may extend from a first opening 612a corresponding to the hole (e.g., the first hole H1) to a second opening 612b corresponding to the shaft 510. The second passage 613 may extend from a third opening 613a corresponding to a microphone (e.g., a first microphone 341) to a fourth opening 613b. The first passage 612 and the second passage 613 may intersect each other. The first passage 612 may guide a movement of the pin 361. The electronic device (e.g., the second exemplary electronic device 2) may include an elastic body (e.g., a third elastic body 630) disposed in the passage structure 610 between the passage structure 610 and the shaft 510 to block a second opening 612b. The electronic device may include a seal 650 disposed in the passage structure 610 to block a fourth opening 613b.

According to an exemplary embodiment of the disclosure, the elastic body (e.g., the third elastic body 630) may include a pleated structure.

According to an exemplary embodiment of the disclosure, the elastic body (e.g., the third elastic body 630) may include a flexible film.

According to an exemplary embodiment of the disclosure, the electronic device (e.g., the second exemplary electronic device 2) may include an adhesive material (not separately illustrated) disposed between the elastic body (e.g., the third elastic body 630) and the shaft 510 to couple the elastic body and the shaft 510.

According to an exemplary embodiment of the disclosure, the first passage 612 and the second passage 613 may intersect each other perpendicularly.

According to an exemplary embodiment of the disclosure, the first passage 612 and the second passage 613 may intersect each other at an acute angle.

According to an exemplary embodiment of the disclosure, the second passage 613 may include a curved section (not separately illustrated).

According to an exemplary embodiment of the disclosure, the socket 310 may include a shaft 510 for receiving a force from the pin 361 inserted through the hole (e.g., the first hole H1). The passage structure 1110 may include a first passage 1112 and a second passage 1113. The first passage 1112 may extend from a first opening 1131 corresponding to the hole H1 to a second opening 1132 corresponding to the shaft 510. The second passage 1113 may extend from the first opening 1131 to a third opening 1133 corresponding to a microphone (e.g., a first microphone 341). The first passage 1112 may guide a movement of the pin 361. The electronic device (e.g., a fifth exemplary electronic device 1100) may include an elastic body (e.g., a third elastic body 630) disposed in the passage structure 1110 between the passage structure 1110 and the shaft 510 to block the second opening 1132.

According to an exemplary embodiment of the disclosure, the socket 310 may include a shaft 510 for receiving a force from the pin 361 inserted through the hole (e.g., the first hole H1). The passage structure 610 may include a first passage 612 and a second passage 613. The first passage 612 may extend from a first opening 612a corresponding to the hole to a second opening 612b corresponding to the shaft 510. The second passage may extend from a third opening 613a corresponding to a microphone (e.g., a first microphone 341) to a fourth opening (not separately illustrated) formed in an inner surface of the first passage 612. The first passage 612 may guide a movement of the pin 361. The electronic device (e.g., the second exemplary electronic device 2) may include an elastic body (e.g., a third elastic body 630) disposed in the passage structure 610 between the passage structure 610 and the shaft 510 to block the second opening 612b.

According to an exemplary embodiment of the disclosure, the microphone (e.g., the first microphone 341) may be disposed in the recess 611 included in the passage structure 610.

According to an exemplary embodiment of the disclosure, the tray 320 may include a first part 321 corresponding to the tray hole 246, and a second part 322 connected to the first part 321 and configured to support the external storage medium 330. The hole (e.g., the first hole H1) may be formed in the housing 20 or the first part 321 of the tray 320.

According to an exemplary embodiment of the disclosure, the housing 20 may form a front surface 20A of the electronic device (e.g., the second exemplary electronic device 2), a rear surface 20B of the electronic device 2, and a side surface 20C of the electronic device 2. The electronic device 2 may include a display module 201 accommodated in the housing 20. The display module 201 may be visible through the front surface 20A. The tray hole 246 may be formed in the side surface 20C. When viewed from above the front surface 20A, the socket 310 and the microphone (e.g., the first microphone 341) may overlap with the display module 201.

According to an exemplary embodiment of the disclosure, the external storage medium 330 may include a SIM card or a USIM card.

According to an exemplary embodiment of the disclosure, the electronic device (e.g., the second exemplary electronic device 2) includes a housing 20, a socket 310, a tray 320, a microphone (e.g., a first microphone 341), a hole (e.g., a first hole H1), and/or a passage structure 610. The housing forms at least a portion of the exterior of the electronic device. The socket 310 is accommodated in the housing 20 corresponding to the tray hole 246 formed in the housing 20. The tray 320 is inserted into the socket 310 through the tray hole 246. The tray 320 is configured to support an external storage medium 330. The microphone is accommodated in the housing 20. The hole is formed in the housing 20 or the tray 320. The passage structure 610 guides sound introduced into the hole from outside the electronic device to the microphone. The passage structure 610 guides the pin 361 from the outside so that the tray 320 is separated.

According to an exemplary embodiment of the disclosure, the socket 310 may include a shaft 510 for receiving a force from the pin 361. The passage structure 610 may include a first passage 612 and a second passage 613. The first passage 612 may extend from a first opening 612a corresponding to the hole (e.g., the first hole H1) to a second opening 612b corresponding to the shaft 510. The second passage 613 may extend from a third opening 613a corresponding to the microphone (e.g., a first microphone 341) to a fourth opening 613b. The first passage 612 and the second passage 613 may intersect each other. The first passage 612 may guide a movement of the pin 361. The electronic device (e.g., the second exemplary electronic device 2) may include an elastic body (e.g., a third elastic body 630) disposed in the passage structure 610 between the passage structure 610 and the shaft 510. The elastic body may block the second opening 612b. The electronic device may include a seal 650 disposed in the passage structure 610. The seal may block the fourth opening 613b.

According to an exemplary embodiment of the disclosure, the first passage 612 and the second passage 613 may intersect each other perpendicularly.

According to an exemplary embodiment of the disclosure, the first passage 612 and the second passage 613 may intersect each other at an acute angle.

According to an exemplary embodiment of the disclosure, the socket 310 may include a shaft 510 for receiving a force from the pin 361 inserted through the hole (e.g., the first hole H1). The passage structure 1110 may include a first passage 1112 and a second passage 1113. The first passage 1112 may extend from a first opening 1131 corresponding to the hole to a second opening 1132 corresponding to the shaft 510. The second passage 1113 may extend from the first opening 1131 to the third opening 1133 corresponding to the microphone (e.g., the first microphone 341). The first passage 1112 may guide a movement of the pin 361. The electronic device (e.g., the fifth exemplary electronic device 1100) may include an elastic body (e.g., a third elastic body 630) disposed in the passage structure 1110 between the passage structure 1110 and the shaft 510. The elastic body 630 may block the second opening 1132.

The embodiments disclosed in the disclosure and the drawings are provided merely as specific examples to more easily describe the technical content and to help the understanding of the disclosure, and are not intended to limit the scope of the disclosure. Accordingly, it should be understood that the scope of various embodiments of the disclosure includes modifications or variations in addition to the embodiments disclosed herein. Additionally, it should be understood that any embodiment(s) described herein may be combined with any other embodiment(s) described herein. In particular, although the disclosure is described in the form of multiple embodiments, each defining a variety of features, it should be emphasized that some of these embodiments may appear to be related only through the same drawing or reference to the drawings. It should be understood that the disclosure includes all combinations of the embodiments described herein, as long as there is no clear contradiction between two (or more) embodiments. That is, in the case that features are presented as optional in the disclosure, all combinations of such optional features are considered to be within the scope of the disclosure.

## Claims

1. An electronic device (2), comprising:
a housing (20) configured to form at least a portion of an exterior of the electronic device (2);
a socket (310) accommodated in the housing (20) corresponding to a tray hole (246) formed in the housing (20);
a tray (320) inserted into the socket (310) through the tray hole (246) and configured to support an external storage medium (330);
a microphone (341) accommodated in the housing (20); and
a hole H1 formed in the housing (20) or the tray (320),
wherein, when a pin (361) is inserted through the hole (H1), the tray (320) is separated from the socket (310), and
wherein sound from outside the electronic device (2) is introduced through the hole (H1) to be transmitted to the microphone (341).

2. The electronic device of claim 1, further comprising a passage structure (610) configured to guide a movement of the pin (361) and to guide sound introduced into the hole (H1) from outside the electronic device (2) to the microphone (341).

3. The electronic device of claim 2, wherein:
the socket (310) comprises a shaft (510) configured to receive a force from the pin (361),
the passage structure (610) comprises a first passage (612) and a second passage (613),
the first passage (612) is configured to extend from a first opening (612a) corresponding to the hole (H1) to a second opening (612b) corresponding to the shaft (510),
the second passage (613) is configured to extend from a third opening (613a) corresponding to the microphone (341) to a fourth opening (613b),
the first passage (612) and the second passage (613) are configured to intersect each other,
the first passage (612) is configured to guide a movement of the pin (361),
the electronic device (2) comprises an elastic body (630) disposed in the passage structure (610) between the passage structure (610) and the shaft (510) to block the second opening (612b), and
the electronic device (2) comprises a seal (650) disposed in the passage structure (610) to block the fourth opening (613b).

4. The electronic device of claim 3, wherein the elastic body (630) comprises a pleated structure.

5. The electronic device of claim 3, wherein the elastic body (630) comprises a flexible film.

6. The electronic device of any one of claims 3 to 5, further comprising an adhesive material disposed between the elastic body (630) and the shaft (510) to couple the elastic body (630) and the shaft (510).

7. The electronic device of any one of claims 3 to 6, wherein the first passage (612) and the second passage (613) are configured to cross each other vertically.

8. The electronic device of any one of claims 3 to 6, wherein the first passage (612) and the second passage (613) are configured to intersect each other at an acute angle.

9. The electronic device of any one of claims 3 to 8, wherein the second passage (613) comprises a curved section.

10. The electronic device of claim 2 or 3, wherein:
the socket (310) comprises a shaft (510) configured to receive a force from the pin (361) inserted through the hole (H1),
the passage structure (1110) comprises a first passage (1112) and a second passage (1113),
the first passage (1112) is configured to extend from a first opening (1131) corresponding to the hole (H1) to a second opening (1132) corresponding to the shaft (510),
the second passage (1113) is configured to extend from the first opening (1131) to a third opening (1133) corresponding to the microphone (341),
the first passage (1112) is configured to guide a movement of the pin (361), and
the electronic device (2) comprises an elastic body (630) disposed in the passage structure (1110) between the passage structure (1110) and the shaft (510) to block the second opening (1132).

11. The electronic device of claim 2 or 3, wherein:
the socket (310) comprises a shaft (510) configured to receive a force from the pin (361) inserted through the hole (H1),
the passage structure (610) comprises a first passage (612) and a second passage (613),
the first passage (612) is configured to extend from a first opening (612a) corresponding to the hole (H1) to a second opening (612b) corresponding to the shaft (510),
the second passage is configured to extend from a third opening (613a) corresponding to the microphone (341) to a fourth opening formed in an inner surface of the first passage (612),
the first passage (612) is configured to guide a movement of the pin (361), and
the electronic device (2) comprises an elastic body (630) disposed in the passage structure (610) between the passage structure (610) and the shaft (510) to block the second opening (612b).

12. The electronic device of any one of claims 2 to 11, wherein the microphone (341) is disposed in a recess (611) included in the passage structure (610).

13. The electronic device of any one of claims 1 to 12, wherein the tray (320) comprises a first part (321) corresponding to the tray hole (246), and a second part (322) connected to the first part (321) and configured to support the external storage medium (330), and
the hole (H1) is formed in the first part (321) of the tray (320) or the housing (20).

14. The electronic device of any one of claims 1 to 13, wherein:
the housing (20) is configured to form a front surface (20A), a rear surface (20B), and a side surface (20C) of the electronic device (2),
the electronic device (2) comprises a display module (201) accommodated in the housing (20),
the display module (201) is visible through the front surface (20A),
the tray hole (246) is formed in the side surface (20C), and
when viewed from above the front surface (20A), the socket (310) and the microphone (341) are configured to overlap with the display module (201).

15. The electronic device of any one of claims 1 to 14, wherein the external storage medium (330) comprises a subscriber identification module (SIM) card or a universal SIM (USIM) card.
